# EUROPEAN PATENT SPECIFICATION

(11) **EP 4 324 646 B1**
(45) Date of publication and mention of the grant of the patent: **11.06.2025**
(21) Application number: 22787915.2
(22) Date of filing: 14.03.2022
(51) Int. Cl.: B32B 27/34, B32B 1/08, B32B 27/18, B32B 27/30, F16L 11/04, F16L 11/127, B32B 7/10

(54) **HOLLOW STRUCTURE FOR FUEL**
HOHLSTRUKTUR FÜR BRENNSTOFF
STRUCTURE CREUSE POUR COMBUSTIBLE

(30) Priority: 13.04.2021 JP 2021067747
(43) Date of publication of application: 21.02.2024
(73) Proprietor: MITSUBISHI GAS CHEMICAL COMPANY, INC., Chiyoda-ku Tokyo 100-8324 (JP)
(72) Inventor: YAMASHITA Momoko, Hiratsuka-shi, Kanagawa 254-0016 (JP); SHIMADA NAKAMURA Jin, Hiratsuka-shi, Kanagawa 254-0016 (JP); ODA Takafumi, Hiratsuka-shi, Kanagawa 254-0016 (JP)
(74) Representative: Vossius & Partner Patentanwälte Rechtsanwälte mbB
(86) International application number: PCT/JP2022/011342
(87) International publication number: WO 2022/219989

(56) References cited:
- WO-A1-2015/022818
- WO-A1-2017/094564
- WO-A1-2019/065232
- JP-A- 2008 018 702

## Description

### Technical Field

The present invention relates to a hollow structure for fuel. In particular, it relates to a hollow structure for liquid fuel.

### Background Art

In recent years, strict exhaust gas regulations have been imposed from the perspective of prevention of environmental pollution, and hollow structures such as tubes, hoses and pipes used in applications such as fuel transportation are required to have high gas barrier properties for the purpose of suppressing volatile components such as volatile hydrocarbon atoms from permeating and diffusing into the atmosphere. Also, in recent years, alcohol gasoline in which alcohols such as methanol and ethanol have been blended are being put into practical use. Since alcohol gasoline has high permeability and easily volatilizes into the atmosphere, further enhancing the gas barrier properties of the hollow structures is important.

Typically, aliphatic polyamides such as polyamide 11 and polyamide 12 have been used as materials for hollow structures for fuel transportation because of their excellent chemical resistance. However, hollow structures formed from these aliphatic polyamides are excellent in toughness, chemical resistance and flexibility, but are not sufficient in fuel barrier properties, and improvement thereof has been desired.

On the other hand, xylylenediamine polyamide resins such as polymetaxylylene adipamide (MXD6) are known as resins having excellent fuel barrier properties.

Therefore, hollow structures for fuel in which these resins are combined have been studied.

For example, Patent Document 1 discloses a multilayer structure (a pipe, a hose, or a tube) including a polyamide layer (A) and a polyamide layer (B), in which the polyamide layer (A) includes a polyamide composition (A) including at least one polyamide (A1) selected from the group including a polyamide (a1) containing at least one of a structural unit derived from a lactam having from 10 to 12 carbon atoms and a structural unit derived from an aminocarboxylic acid having from 10 to 12 carbon atoms and a polyamide (a2) containing a structural unit derived from an aliphatic diamine having from 6 to 12 carbon atoms and a structural unit derived from an aliphatic dicarboxylic acid having from 10 to 12 carbon atoms, and in which the polyamide layer (B) includes a polyamide composition (B) including: a polyamide resin (b1) including a diamine unit containing 70 mol% or more of a structural unit derived from xylylenediamine and a dicarboxylic acid unit containing 70 mol% or more of a structural unit derived from an aliphatic dicarboxylic acid having 4 to 12 carbon atoms; a modified polyolefin (B2); and at least one polyamide (B3) selected from the group including a polyamide resin (b1) containing at least one of a structural unit derived from a lactam having from 6 to 12 carbon atoms and a structural unit derived from an aminocarboxylic acid having from 6 to 12 carbon atoms and a polyamide resin (b2) containing a structural unit derived from an aliphatic diamine having from 6 to 12 carbon atoms and a structural unit derived from an aliphatic dicarboxylic acid having from 10 to 12 carbon atoms, and a content of the modified polyolefin (B2) is from 5 to 15 parts by mass and a content of the polyamide (B3) is from 5 to 20 parts by mass based on 100 parts by mass of the polyamide resin (b1).

### Citation List

### Patent Documents

Patent Document 1: WO 2017/094564
Patent document 2: WO 2019/065232 related to a hollow structure for fuel having an improved chemical resistance and interlayer adhesion

### Summary of Invention

### Technical Problem

The hollow structure for fuel as described in patent document 1 is required to have fuel barrier properties and low-temperature impact resistance. Further, in recent years, the hollow structure for fuel is required to have conductivity in applications in which liquid fuel flows through. In order to achieve conductivity, it is conceivable to provide a conductive layer using a fluororesin containing a conductive substance as a conductive material. However, the fluororesin does not adhere to a polyamide resin, and a tube obtained by co-extruding the polyamide resin and the fluororesin peels off at an interface between the polyamide resin layer and the fluororesin layer (conductive layer). In order to solve this issue, an acidic functional group that chemically bonds with the polyamide resin is generally added to the fluororesin for improving the adhesion between the polyamide resin layer and the fluororesin layer (conductive layer) during co-extrusion.

Meanwhile, the polyamide resin used for the hollow structure for fuel may be blended with a polyolefin for the purpose of improving impact resistance. In particular, an acid-modified polyolefin may be blended in order to impart adhesion to the polyamide resin. Therefore, in a polyamide resin composition containing a polyamide resin and a polyolefin, an amino group of the polyamide resin and an acid group of the polyolefin react with each other, and the polyamide resin composition may have a low amino group concentration before co-extrusion with a fluororesin. The adhesion between such a polyamide resin composition having a low amino group concentration and the fluororesin layer (conductive layer) tends to decrease. In particular, this tendency tends to expand in the hollow structure after fuel is sealed therein. Further, it is generally known that delamination between layers of a multilayer hollow structure causes not only low-temperature impact resistance but also fuel barrier properties to deteriorate.

In addition, a fluororesin used in a conductive layer is generally expensive, and thus it is industrially preferable to laminate a conductive layer thinly. However, when the thickness of the layer is reduced, the fuel barrier properties become insufficient, and, therefore, a barrier layer is generally provided separately. That is, a hollow structure for fuel, in which a conductive layer containing a fluororesin is used, that is excellent in fuel barrier properties and low-temperature impact resistance, and further is excellent in interlayer adhesion has not been obtained.

An object of the present invention is to solve such issues, and to provide a hollow structure for fuel, which is a hollow structure in which a conductive layer containing a fluororesin is used, that is excellent in fuel barrier properties and low-temperature impact resistance, and further is excellent in interlayer adhesion.

### Solution to Problem

In view of the above issues, the hollow structure is composed of at least four layers, and a prescribed polyamide resin layer is provided between a conductive layer and a barrier layer. Thus, the above issues have been solved. Specifically, the issues described above have been solved by the following means:
<1> A hollow structure for fuel including a polyamide resin layer (A), a polyamide resin layer (B), a polyamide resin layer (C), and a conductive layer (D) in this order from an outside,
   in which the polyamide resin layer (A) contains a polyamide resin (a), 90 mol% or more of all structural units of the polyamide resin (a) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms,
   in which the polyamide resin layer (B) contains a polyolefin, a polyamide resin (b1), and a polyamide resin (b2); a content of the polyolefin is from 5 to 40 mass% of the polyamide resin layer (B); a mass ratio (b1/b2) between a content of the polyamide resin (b1) and a content of the polyamide resin (b2) is from 55/45 to 95/5, the polyamide resin (b1) containing: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms, the polyamide resin (b2) containing: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms,
   in which the polyamide resin layer (C) contains a polyamide resin (c), 90 mol% or more of all structural units of the polyamide resin (c) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms, and
   in which the conductive layer (D) contains a fluororesin and a conductive substance.
<2> The hollow structure for fuel according to <1>, in which the polyamide resin layer (A) contains a polyolefin.
<3> The hollow structure for fuel according to <2>, in which the polyolefin contained in the polyamide resin layer (A) and the polyolefin contained in the polyamide resin layer (B) are each an acid-modified polyolefin.
<4> The hollow structure for fuel according to any one of <1> to <3>, in which a content of the polyolefin contained in the polyamide resin layer (C) is from 0 to 7 mass%.
<5> The hollow structure for fuel according to any one of <1> to <4>, in which a thickness of the layer (A)/a thickness of the layer (C), which is a ratio of the thickness of the polyamide resin layer (A) to the thickness of the polyamide resin layer (C), is from 3.0 to 9.0 times, and a thickness of the layer (B)/a thickness of the layer (C), which is a ratio of the thickness of the polyamide resin layer (B) to the thickness of the polyamide resin layer (C), is more than 1.0 time and 3.0 times or less.
<6> The hollow structure for fuel according to <5>, in which the polyamide resin layer (A) contains a polyolefin, each polyolefin contained in the polyamide resin layer (A) and the polyamide resin layer (B) is an acid-modified polyolefin, and a content of the polyolefin contained in the polyamide resin layer (C) is from 0 to 7 mass%.
<7> The hollow structure for fuel according to any one of <1> to <6>, in which, in the polyamide resin layer (B), a total of the polyolefin, the polyamide resin (b1), and the polyamide resin (b2) accounts for more than 95 mass% of the polyamide resin layer (B).
<8> The hollow structure for fuel according to any one of <1> to <7>, in which the fluororesin contains a fluoroethylene (co)polymer.
<9> The hollow structure for fuel according to any one of <1> to <7>, in which the fluororesin contains an ethylene/fluoroethylene propylene copolymer.
<10> The hollow structure for fuel according to any one of <1> to <9>, in which the conductive substance contains a conductive carbon compound.
<11> The hollow structure for fuel according to any one of <1> to <10>, in which the polyamide resin layer (A) contains a plasticizer in a proportion of from 1 to 20 mass% in the polyamide resin layer (A).
<12> The hollow structure for fuel according to any one of <1> to <11>, in which the polyamide resin layer (C) contains a plasticizer in a proportion of from 1 to 20 mass% in the polyamide resin layer (C).

### Advantageous Effects of Invention

The present invention has made it possible to provide a hollow structure for fuel, which is a hollow structure in which a conductive layer containing a fluororesin is used, that is excellent in fuel barrier properties and low-temperature impact resistance, and further is excellent in interlayer adhesion.

### Brief Description of Drawings

FIG. 1 is a schematic diagram illustrating an example of a cross section of a hollow structure for fuel of the present invention.
FIG. 2 is an image diagram indicating an evaluation method of interlayer adhesion in Examples.

### Description of Embodiments

Hereinafter, embodiments for carrying out the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

The hollow structure in the present specification is a structure having a hollow structure, is preferably sufficiently long in a longitudinal direction with respect to a cross section, includes a tube, a pipe, a hose, and the like, and is preferably a tube.

When a measurement method or the like of a standard set forth in the present specification differs depending on the year, it is based on the standard as of January 1, 2021 unless otherwise stated.

The hollow structure for fuel (hereinafter, sometimes simply referred to as "hollow structure") of the present embodiments is a hollow structure for fuel including a polyamide resin layer (A), a polyamide resin layer (B), a polyamide resin layer (C), and a conductive layer (D) in this order from the outside, in which the polyamide resin layer (A) contains a polyamide resin (a), 90 mol% or more of all structural units of the polyamide resin (a) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms, in which the polyamide resin layer (B) contains a polyolefin, a polyamide resin (b1), and a polyamide resin (b2); a content of the polyolefin is from 5 to 40 mass% of the polyamide resin layer (B); a mass ratio (b1/b2) between a content of the polyamide resin (b1) and a content of the polyamide resin (b2) is from 55/45 to 95/5, the polyamide resin (b1) containing: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms, the polyamide resin (b2) containing: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms, in which the polyamide resin layer (C) contains a polyamide resin (c), 90 mol% or more of all structural units of the polyamide resin (c) being one or more of: a structural unit derived from a lactam having from 10 to 12 carbon atoms; a structural unit derived from an aminocarboxylic acid having from 10 to 12 carbon atoms, a structural unit derived from an aliphatic dicarboxylic acid having from 6 to 12 carbon atoms; and a structural unit derived from an aliphatic diamine having from 6 to 12 carbon atoms, and in which the conductive layer (D) contains a fluororesin and a conductive substance.

According to such a configuration, there can be obtained a hollow structure for fuel, which is a hollow structure in which a fluororesin as a conductive layer is used, that is excellent in fuel barrier properties and low-temperature impact resistance, and further is excellent in interlayer adhesion.

### <Hollow structure for fuel>

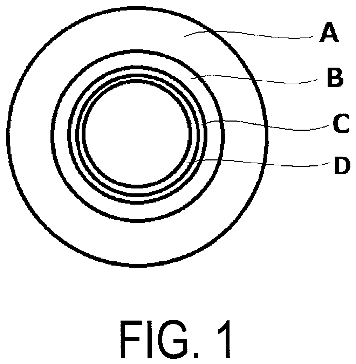

The hollow structure for fuel (hereinafter sometimes simply referred to as "hollow structure") in the present embodiments includes a polyamide resin layer (A) (hereinafter sometimes simply referred to as "layer (A)"), a polyamide resin layer (B) (hereinafter sometimes simply referred to as "layer (B)"), a polyamide resin layer (C) (hereinafter sometimes simply referred to as "layer (C)"), and a conductive layer (D) (hereinafter sometimes simply referred to as "layer (D)") in this order from the outside. Specifically, FIG. 1 is a schematic diagram indicating an example of a cross section of the hollow structure for fuel of the present invention, in which A represents a polyamide resin layer (A), B represents a polyamide resin layer (B), C represents a polyamide resin layer (C), and D represents a conductive layer (D).

In the hollow structure of the present embodiments, the polyamide resin layer (A) and the polyamide resin layer (B) may or may not be in contact with each other, but are usually in contact with each other. When the polyamide resin layer (A) and the polyamide resin layer (B) are not in contact with each other, an adhesive resin having an acid group or polyamide resin which adheres to both of the layers is preferably provided therebetween, and an adhesive resin having an acid group is more preferably provided therebetween. In the hollow structure of the present embodiments, the polyamide resin layer (B) and the polyamide resin layer (C) may or may not be in contact with each other, but are usually in contact with each other. When the polyamide resin layer (B) and the polyamide resin layer (C) are not in contact with each other, an adhesive resin having an acid group or polyamide resin which adheres to both of the layers is preferably provided therebetween, and an adhesive resin having an acid group is more preferably provided therebetween. In the hollow structure of the present embodiments, the polyamide resin layer (C) and the conductive layer (D) may or may not be in contact with each other, but are usually in contact with each other. Each of the polyamide resin layer (A), the polyamide resin layer (B), the polyamide resin layer (C), and the conductive layer (D) may be one layer, or two or more layers. In addition, a layer may be additionally present inside the layer (D) and/or outside the layer (A). However, it is preferable that no layer is present inside the layer (D).

A preferable layer configuration of the hollow structure of the present embodiments has the polyamide resin layer (A), the polyamide resin layer (B), the polyamide resin layer (C), and the conductive layer (D) in this order from the outside, and it is preferable that the polyamide resin layer (A) and the polyamide resin layer (B) are in contact with each other, that the polyamide resin layer (B) and the polyamide resin layer (C) are in contact with each other, and that the polyamide resin layer (C) and the conductive layer (D) are in contact with each other. Furthermore, it is preferable that no layer is present inside the conductive layer (D), that is, the conductive layer (D) is the innermost layer. Further, a structure in which the layer (C) and the layer (B) are alternately and repeatedly provided between the layer (D) and the layer (A) may be employed.

A preferable layer configuration of the hollow structure of the present embodiments is as follows:
Layer (D)/Layer (C)/Layer (B)/Layer (A)
Layer (D)/Layer (C)/Layer (B)/Layer (A)/Layer (A)
Layer (D)/Layer (C)/Layer (B)/Layer (B)/Layer (A)
Layer (D)/Layer (C)/Layer (C)/Layer (B)/Layer (A)
Layer (D)/Layer (D)/Layer (C)/Layer (B)/Layer (A)
Layer (D)/Layer (C)/Layer (C)/Layer (B)/Layer (B)/Layer (A)
Layer (D)/Layer (C)/Layer (B)/Layer (B)/Layer (A)/Layer (A)
Layer (D)/Layer (C)/Layer (C)/Layer (B)/Layer (A)/Layer (A)
Layer (D)/Layer (D)/Layer (C)/Layer (B)/Layer (B)/Layer (A)
Layer (D)/Layer (D)/Layer (C)/Layer (B)/Layer (A)/Layer (A)
Layer (D)/Layer (D)/Layer (C)/Layer (C)/Layer (B)/Layer (A)
Layer (D)/Layer (C)/Layer (B)/Layer (C)/Layer (B)/Layer (A)
Layer (D)/Layer (D)/Layer (C)/Layer (C)/Layer (B)/Layer (B)/Layer (A)
Layer (D)/Layer (D)/Layer (C)/Layer (C)/Layer (B)/Layer (A)/Layer (A)
Layer (D)/Layer (D)/Layer (C)/Layer (B)/Layer (B)/Layer (A)/Layer (A)
Layer (D)/Layer (C)/Layer (C)/Layer (B)/Layer (B)/Layer (A)/Layer (A)
Layer (D)/Layer (D)/Layer (C)/Layer (C)/Layer (B)/Layer (B)/Layer (A)/Layer (A)

Further, in the above layer configuration, a layer configuration further having a layer provided inside the layer (D) may be employed. Further, in the above layer configuration, a layer configuration further having a layer outside the layer (A) is also preferable.

When the hollow structure of the present embodiments has a layer other than the layers (A) to (D), examples of the layer include resin layers composed of thermoplastic resins such as maleic anhydride-modified polyolefin, polyimide, polyamide, polyester, polystyrene, and vinyl chloride, and adhesive layers.

### <Polyamide resin layer (A)>

The polyamide resin layer (A) contains a polyamide resin (a), and 90 mol% or more of all structural units of the polyamide resin (a) are one or more of a structural unit derived from a lactam having from 10 to 12 carbon atoms, a structural unit derived from an aminocarboxylic acid having from 10 to 12 carbon atoms, a structural unit derived from an aliphatic dicarboxylic acid having from 6 to 12 carbon atoms, and a structural unit derived from an aliphatic diamine having from 6 to 12 carbon atoms. By using the polyamide resin layer (A) containing the polyamide resin (a) having such relatively high flexibility, the low-temperature impact resistance can be improved.

In the polyamide resin (a), 90 mol% or more of all structural units are one or more of a structural unit derived from a lactam having from 10 to 12 carbon atoms, a structural unit derived from an aminocarboxylic acid having from 10 to 12 carbon atoms, a structural unit derived from an aliphatic dicarboxylic acid having from 6 to 12 carbon atoms, and a structural unit derived from an aliphatic diamine having from 6 to 12 carbon atoms, and it is preferable that 95 mol% or more of all the structural units include the above structural units, and it is more preferable that 99 mol% or more of all the structural units include the above structural units.

In addition, in the case where it contains both a structural unit derived from an aliphatic dicarboxylic acid having from 6 to 12 carbon atoms and a structural unit derived from an aliphatic diamine having from 6 to 12 carbon atoms, at least one of the structural units preferably has from 10 to 12 carbon atoms. A hollow structure more excellent in gas barrier properties is obtained by adopting such a configuration.

The polyamide resin (a) more preferably contains the following polyamide resins (a1) and/or (a2), and even more preferably contains the following polyamide resin (a1):
(a1) A polyamide resin in which 90 mol% or more of all structural units are a structural unit derived from a lactam having from 10 to 12 carbon atoms and/or a structural unit derived from an aminocarboxylic acid having from 10 to 12 carbon atoms (preferably a structural unit derived from a lactam having from 10 to 12 carbon atoms).
(a2) A polyamide resin in which 90 mol% or more of all structural units are a structural unit derived from an aliphatic dicarboxylic acid having from 6 to 12 carbon atoms and a structural unit derived from an aliphatic diamine having from 6 to 12 carbon atoms.

In the polyamide resin (a1), the number of carbon atoms of the structural unit derived from a lactam having from 10 to 12 carbon atoms and the structural unit derived from an aminocarboxylic acid having from 10 to 12 carbon atoms is preferably from 11 to 12 carbon atoms, and more preferably 12 carbon atoms from the perspective of flexibility, availability, and the like.

The structural unit derived from a lactam having from 10 to 12 carbon atoms and the structural unit derived from an aminocarboxylic acid having from 10 to 12 carbon atoms usually include an ω-aminocarboxylic acid unit represented by Formula (I) below:

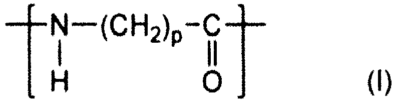

In Formula (I), p represents an integer of from 9 to 11, preferably from 10 to 11, and more preferably 11.

The polyamide resin (a1) may contain only one or two or more structural unit(s) represented by Formula (I).

Specific examples of a compound constituting the structural unit derived from a lactam having from 10 to 12 carbon atoms include decanelactam, undecanelactam, and dodecanelactam. Examples of a compound constituting the structural unit derived from an aminocarboxylic acid having from 10 to 12 carbon atoms include 10-aminodecanoic acid, 11-aminoundecanoic acid, and 12-aminododecanoic acid.

The polyamide resin (a1) may contain a structural unit other than the lactam-derived structural unit and the aminocarboxylic acid-derived structural unit. Examples of the other structural unit include a structural unit derived from a lactam other than the lactam having from 10 to 12 carbon atoms, a structural unit derived from an aminocarboxylic acid other than the aminocarboxylic acid having from 10 to 12 carbon atoms, a structural unit derived from a diamine, and a structural unit derived from a dicarboxylic acid.

Examples of lactams other than the lactam having from 10 to 12 carbon atoms include lactams having 3 to 9 carbon atoms, and specific examples thereof include ε-caprolactam, ω-enantholactam, α-pyrrolidone, and α-piperidone. Examples of the aminocarboxylic acid other than the aminocarboxylic acid having from 10 to 12 carbon atoms include 6-aminocaproic acid, 7-aminoheptanoic acid, and 9-aminononanoic acid. One of these can be used alone, or two or more thereof can be used in combination.

Examples of the diamine include aliphatic diamines such as ethylene diamine, propylene diamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2-methyl-1,5-pentanediamine, 3-methyl-1,5-pentanediamine, 2-methyl-1,8-octanediamine and 2,2,4- or 2,4,4-trimethylhexanediamine; cycloaliphatic diamines such as 1,3- or 1,4-cyclohexanediamine, 1,3- or 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl) propane, 5-amino-2,2,4-trimethylcyclopentanemethanamine, 5-amino-1,3,3-trimethylcyclohexanemethanamine, bis(aminopropyl) piperazine, bis(aminoethyl) piperazine, norbornanedimethylamine and tricyclodecanedimethylamine; and aromatic ring-containing diamines such as paraxylylenediamine and metaxylylenediamine. One of these can be used alone, or two or more thereof can be used in combination.

Examples of the dicarboxylic acid include aliphatic dicarboxylic acids such as adipic acid, pimelic acid, suberic acid, azelaic acid, sebacic acid, 1, 9-nonanedicarboxylic acid, 1,10-decanedicarboxylic acid, 1,11-undecanedicarboxylic acid and 1,12-dodecanedicarboxylic acid; alicyclic dicarboxylic acids such as 1,3-or 1,4-cyclohexanedicarboxylic acid, dicyclohexanemethane-4,4'-dicarboxylic acid and norbornanedicarboxylic acid; and aromatic dicarboxylic acids such as isophthalic acid, terephthalic acid and 1,4 -, 2,6-or 2,7-naphthalenedicarboxylic acid. One of these can be used alone, or two or more thereof can be used in combination.

The polyamide resin (a1) is preferably polyamide 11 containing at least one of an undecanelactam-derived structural unit and a 11-aminoundecanoic acid-derived structural unit as a main component, polyamide 12 containing at least one of a dodecanelactam-derived structural unit and a 12-aminododecanoic acid-derived structural unit as a main component, or a mixture of the polyamide 11 and the polyamide 12, and more preferably polyamide 12.

As for the polyamide resin (a1), reference can be made to the descriptions in paragraphs [0011] to [0019] of WO 2017/094564

In the polyamide resins (a2), 90 mol% or more of all structural units are a structural unit derived from an aliphatic dicarboxylic acid having from 6 to 12 carbon atoms and a structural unit derived from an aliphatic diamine having from 6 to 12 carbon atoms. In the polyamide resins (a2), at least one of the structural unit derived from the aliphatic dicarboxylic acid having from 6 to 12 carbon atoms and the structural unit derived from the aliphatic diamine having from 6 to 12 carbon atoms preferably has from 10 to 12 carbon atoms, and more preferably both the structural unit derived from the aliphatic dicarboxylic acid having from 6 to 12 carbon atoms and the structural unit derived from the aliphatic diamine having from 6 to 12 carbon atoms have from 10 to 12 carbon atoms.

The aliphatic dicarboxylic acid having from 6 to 12 carbon atoms is preferably an aliphatic dicarboxylic acid having from 10 to 12 carbon atoms, and more preferably adipic acid, pimelic acid, suberic acid, azelaic acid, sebacic acid, 1,9-nonanedicarboxylic acid, 1,10-decanedicarboxylic acid, or the like. The polyamide resin (a2) may contain only one or two or more structural unit(s) derived from an aliphatic dicarboxylic acid having from 6 to 12 carbon atoms.

Examples of the dicarboxylic acid other than the aliphatic dicarboxylic acid having from 6 to 12 carbon atoms include aliphatic dicarboxylic acids having 5 or less carbon atoms or 13 or more carbon atoms, and aromatic dicarboxylic acids. Examples of the aliphatic dicarboxylic acid having 5 or less carbon atoms or 13 or more carbon atoms include succinic acid, glutaric acid, 1,11-undecanedicarboxylic acid, 1,12-dodecanedicarboxylic acid, 1,13-tridecanedicarboxylic acid, and 1,14-tetradecanedicarboxylic acid. Examples of the aromatic dicarboxylic acid include terephthalic acid, isophthalic acid, and 2,6-naphthalenedicarboxylic acid. One of these can be used alone, or two or more thereof can be used in combination.

On the other hand, the aliphatic group constituting the aliphatic diamine having from 6 to 12 carbon atoms is a linear or branched divalent aliphatic hydrocarbon group, and may be a saturated aliphatic group or an unsaturated aliphatic group, but is usually a linear saturated aliphatic group. The number of carbon atoms of the aliphatic group is preferably from 8 to 12, more preferably from 9 to 12, and even more preferably from 10 to 12. Examples of a compound that can constitute the diamine-derived structural unit of the polyamide resins (a2) include hexamethylenediamine, heptamethylenediamine, octamethylenediamine, nonamethylenediamine, decamethylenediamine, and undecamethylenediamine. One of these can be used alone, or two or more thereof can be used in combination.

The polyamide resin (a2) may contain a structural unit derived from an aliphatic diamine other than the structural unit derived from an aliphatic diamine having from 6 to 12 carbon atoms. Examples of diamines other than the aliphatic diamine having from 6 to 12 carbon atoms can include, but are not limited to, alicyclic diamines such as ethylenediamine, propylenediamine, tetramethylenediamine, pentamethylenediamine, 1,3- or 1,4-bis(aminomethyl)cyclohexane, 1,3- or 1,4-diaminocyclohexane, bis(4-aminocyclohexyl)methane, 2,2-bis(4-aminocyclohexyl) propane, bis(aminomethyl)decalin, and bis(aminomethyl)tricyclodecane.; and diamines having an aromatic ring such as bis(4-aminophenyl)ether, paraphenylenediamine, and bis(aminomethyl)naphthalene. One of these can be used alone, or two or more thereof can be used in combination.

As for the polyamide resin (a2), reference can be made to the descriptions in paragraphs [0020] to [0027] of WO 2017/094564

A content of the polyamide resin (a) in the polyamide resin layer (A) is preferably 50 mass% or more, more preferably 55 mass% or more, even more preferably 60 mass% or more, still more preferably 65 mass% or more, and even still more preferably 70 mass% or more. When the content is equal to or more than the lower limit value, the polyamide resin layer (A) tends to be more excellent in adhesion to the polyamide resin layer (B) while the fuel barrier properties of the polyamide resin layer (A) are ensured to some extent or more. In addition, the content of the polyamide resin (a) in the polyamide resin layer (A) is preferably 95 mass% or less, more preferably 90 mass% or less, even more preferably 86 mass% or less, and still more preferably 84 mass% or less. When the content is equal to or less than the upper limit value, an impact resistance modifier (for example, polyolefin) can be sufficiently added, and the obtained hollow structure tends to be more excellent in low-temperature impact resistance.

The polyamide resin layer (A) may contain only one or two or more polyamide resin(s) (a). When two or more polyamide resins are contained, the total amount thereof is preferably in the above range.

The polyamide resin layer (A) may also contain a polyolefin. By including a polyolefin in the polyamide resin layer (A), the low-temperature impact resistance can be further improved.

The polyolefin is preferably a homopolymer and/or a copolymer of an α-olefin such as ethylene, propylene or butene.

As the polyethylene, it is possible to use low density polyethylene (LDPE), linear low density polyethylene (LLDPE), very low density polyethylene (VLDPE), medium density polyethylene (MDPE), high density polyethylene (HDPE), or the like.

As the copolymer, a copolymer of at least two of ethylene, propylene and butene, or a copolymer of at least one of ethylene, propylene and butene and a monomer copolymerizable therewith can be used. Examples of the monomer that can be copolymerized with at least one of ethylene, propylene, and butene include α-olefins, styrenes, dienes, cyclic compounds, and oxygen atom-containing compounds. Particularly preferred copolymers include ethylene/butene copolymers and ethylene/propylene copolymers, with ethylene/butene copolymers being preferred.

As for the details of the α-olefins, the styrenes, the dienes, the cyclic compounds, and the oxygen atom-containing compounds, reference can be made to the description in paragraph [0044] of WO 2017/094564

The copolymer may be any of an alternating copolymer, a random copolymer, and a block copolymer.

In the present embodiments, the polyolefin is preferably an acid-modified polyolefin. The acid-modified polyolefin is preferably a polyolefin acid-modified with a carboxylic acid and/or a derivative thereof, and a polyolefin acid-modified with a carboxylic acid and/or a derivative thereof and further having a polyamide graft-bonded thereto via a functional group introduced into the molecule by the acid modification (also referred to as "polyamide-graft-modified polyolefin"). By using the acid-modified polyolefin, a functional group having affinity for the polyamide resin (b) contained in the polyamide resin layer (B) can be introduced into the molecule. In addition, since the polyamide is further graft-modified via the functional group having affinity for the polyamide component, the affinity for the polyamide resin (b) can be further increased.

Preferred examples of the functional group having affinity for the polyamide component include a carboxylic acid group, a carboxylic anhydride group, a carboxylic acid ester group, a carboxylic acid metal salt group, a carboxylic acid imide group, a carboxylic acid amide group, and an epoxy group.

Preferred examples of a compound capable of acid-modifying a polyolefin include acrylic acid, methacrylic acid, maleic acid, fumaric acid, itaconic acid, crotonic acid, methylmaleic acid, methylfumaric acid, mesaconic acid, citraconic acid, glutaconic acid, cis-4-cyclohexene-1,2-dicarboxylic acid, endobicyclo[2.2.1]-5-heptene-2,3-dicarboxylic acid and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2, 3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. One of these can be used alone, or two or more thereof can be used in combination. Among these, maleic anhydride is preferable from the perspective of melt-miscibility with other resins.

The acid-modified polyolefin particularly preferably used in the embodiments include maleic anhydride-modified polyethylene, maleic anhydride-modified α-olefin copolymers such as maleic anhydride-modified ethylene/butene copolymers, and polyolefins graft-modified with aliphatic polyamides, from the perspective of elastic modulus, flexibility, and impact resistance. Among them, maleic anhydride-modified ethylene/butene copolymers are particularly preferably used.

In the present embodiments, it is particularly preferable that each polyolefin contained in the polyamide resin layer (A) and the polyamide resin layer (B) is an acid-modified polyolefin.

Additionally, as for the polyolefin, reference can be made to the descriptions in paragraphs [0042] to [0056] of WO 2017/094564

When the polyamide resin layer (A) contains a polyolefin, a content of the polyolefin is preferably 4 mass% or more, more preferably 7 mass% or more, even more preferably 10 mass% or more, and still more preferably 12 mass% or more. When the content is equal to or more than the lower limit value, the low-temperature impact resistance tends to be further improved. In addition, the content of the polyolefin in the polyamide resin layer (A) is preferably 30 mass% or less, more preferably 25 mass% or less, even more preferably 22 mass% or less, still more preferably 20 mass% or less, and even still more preferably 17 mass% or less. When the content is equal to or less than the upper limit value, the proportion of the polyamide resin (a) can be relatively increased, and the polyamide resin (a) can effectively exert its inherent fuel barrier properties.

The polyamide resin layer (A) may contain only one or two or more polyolefin(s). When two or more polyolefins are contained, the total amount thereof is preferably in the above range.

The polyamide resin layer (A) may contain a plasticizer. By including a plasticizer in the polyamide resin layer (A), the low-temperature impact resistance can be further improved. In particular, in the present embodiments, the amount of an eluate can be reduced even when a plasticizer is blended in the polyamide resin layer (A), by providing the polyamide resin layer (B) having excellent fuel barrier properties and further increasing the number of layers. That is, the fuel moves into the layer (D), the layer (C), the layer (B), and the layer (A) in this order, takes in the plasticizer, returns to the layer (B), the layer (C), and the layer (D) in this order, and can become an eluate eluted into the tube. In the present embodiments, the polyamide resin layer (B) having a high barrier function allows the movement of the fuel through the layers to be effectively suppressed, and the amount of the eluate can be suppressed to be low even when the plasticizer is blended.

Examples of the plasticizer include benzenesulfonic acid alkylamide, toluenesulfonic acid alkylamide, and hydroxybenzoic acid alkyl ester, and benzenesulfonic acid alkylamide is preferable.

Examples of benzenesulfonic acid alkylamide include benzenesulfonic acid propylamide, benzenesulfonic acid butylamide (N-butylbenzenesulfonamide), and benzenesulfonic acid 2-ethylhexylamide. Examples of the toluenesulfonic acid alkylamide include N-ethyl-o-toluenesulfonic acid butylamide, N-ethyl-p-toluenesulfonic acid butylamide, N-ethyl-o-toluenesulfonic acid 2-ethylhexylamide, and N-ethyl-p-toluenesulfonic acid 2-ethylhexylamide. Examples of the hydroxybenzoic acid alkyl ester include ethylhexyl o-hydroxybenzoate, ethylhexyl p-hydroxybenzoate, hexyldecyl o-hydroxybenzoate, hexyldecyl p-hydroxybenzoate, ethyldecyl o-hydroxybenzoate, ethyldecyl p-hydroxybenzoate, octyloctyl o-hydroxybenzoate, octyloctyl p-hydroxybenzoate, decyldodecyl o-hydroxybenzoate, decyldodecyl p-hydroxybenzoate, methyl o-hydroxybenzoate, methyl p-hydroxybenzoate, butyl o-hydroxybenzoate, butyl p-hydroxybenzoate, hexyl o-hydroxybenzoate, hexyl p-hydroxybenzoate, n-octyl o-hydroxybenzoate, n-octyl p-hydroxybenzoate, decyl o-hydroxybenzoate, decyl p-hydroxybenzoate, dodecyl o-hydroxybenzoate, and dodecyl p-hydroxybenzoate.

When the polyamide resin layer (A) contains a plasticizer, a content of the plasticizer is preferably 1 mass% or more, more preferably 2 mass% or more, even more preferably 3 mass% or more, and still more preferably 4 mass% or more. When the content is equal to or more than the lower limit value, the low-temperature impact resistance tends to be further improved. In addition, the content of the plasticizer in the polyamide resin layer (A) is preferably 20 mass% or less, more preferably 18 mass% or less, even more preferably 17 mass% or less, still more preferably 16 mass% or less, and even still more preferably 15 mass% or less. Furthermore, when the content is equal to or less than the upper limit value, the amount of the plasticizer-derived eluate can be made smaller.

The polyamide resin layer (A) may contain only one or two or more plasticizer(s). When two or more plasticizers are contained, the total amount thereof is preferably in the above range.

In the present embodiments, a mass ratio between the polyolefin and the plasticizer in the polyamide resin layer (A) is preferably from 1:0.2 to 1:3.5, more preferably from 1:0.2 to 1:2.0, even more preferably from 1:0.3 to 1:0.95, and still more preferably from 1:0.4 to 1:0.8. Within such a range, the amount of the eluate can be effectively reduced while the low-temperature impact resistance can be effectively maintained.

The polyamide resin layer (A) may contain other components in addition to the above components. Examples of the other components include a thermoplastic resin other than the polyamide resin (a), a conductive substance, an antioxidant, a heat stabilizer, an ultraviolet absorber, a light stabilizer, a lubricant, an inorganic filler, an antistatic agent, a flame retardant, a compatibilizer, a crystallization accelerator, and an impact resistance modifier other than the polyolefin. A total content of these other components is preferably 20 mass% or less, more preferably 15 mass% or less, and even more preferably 12 mass% or less.

According to the present embodiments, in the polyamide resin layer (A), a total content of the polyamide resin (a) and the polyolefin and the plasticizer which are blended as necessary accounts for preferably 90 mass% or more, more preferably 95 mass% or more, even more preferably 98 mass% or more, and still more preferably 99 mass% or more of the layer (A).

The polyamide resin layer (A) is preferably substantially free of conductive substance. The term "substantially free" means that the content of the conductive substance is 10 mass% or less, preferably 5 mass% or less, more preferably 3 mass% or less, and even more preferably 1 mass% or less of the content of the conductive substance contained in the conductive layer (D).

A thickness of the polyamide resin layer (A) is preferably 10% or more, more preferably 30% or more, even more preferably 40% or more, still more preferably 50% or more, and even still more preferably 60% or more when a total thickness of the hollow structure is defined as 100%. When the thickness is equal to or more than the lower limit value, the low-temperature impact resistance of the hollow structure tends to be further improved. The thickness of the polyamide resin layer (A) is preferably 90% or less, more preferably 80% or less, even more preferably 75% or less, still more preferably 70% or less, and even still more preferably 65% or less when the total thickness of the hollow structure is defined as 100%. When the thickness is equal to or less than the upper limit value, the barrier layer and the conductive layer can be laminated with a functional thickness, and the fuel barrier properties and the conductivity tend to be further improved.

Also, the thickness of the polyamide resin layer (A) is preferably 100 µm or more, more preferably 200 µm or more, even more preferably 300 µm or more, still more preferably 400 µm or more, and even still more preferably 500 µm or more. Also, the thickness of the polyamide resin layer (A) is preferably 3000 µm or less, more preferably 2000 µm or less, even more preferably 1000 µm or less, still more preferably 800 µm or less, and even still more preferably 700 µm or less.

### <Polyamide resin layer (B)>

The polyamide resin layer (B) contains a polyolefin, a polyamide resin (b1), and a polyamide resin (b2). A content of the polyolefin is from 5 to 40 mass% of the polyamide resin layer (B), and a mass ratio (b1/b2) between a content of the polyamide resin (b1) and a content of the polyamide resin (b2) is from 55/45 to 95/5. The polyamide resin (b1) contains: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms. The polyamide resin (b2) contains: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms.

As described above, the polyamide resin layer (B) contains a polyolefin. By including a polyolefin, the low-temperature impact resistance of the hollow structure can be further improved.

The polyolefin is preferably an acid-modified polyolefin. The details of the polyolefin are synonymous with those described for the polyamide resin layer (A), and preferred ranges are also the same.

A content of the polyolefin in the polyamide resin layer (B) is preferably 5 mass% or more, more preferably 6 mass% or more, even more preferably 7 mass% or more, and still more preferably 8 mass% or more. When the content is equal to or more than the lower limit value, the low-temperature impact resistance tends to be further improved. The content of the polyolefin in the polyamide resin layer (B) is preferably 40 mass% or less, more preferably 35 mass% or less, even more preferably 28 mass% or less, still more preferably 25 mass% or less, and even still more preferably 18 mass% or less. When the content is equal to or less than the upper limit value, the fuel barrier properties are further improved, and the suppression of the amount of the eluate tends to be more effectively exhibited. Furthermore, moldability tends to be improved.

The polyamide resin layer (B) may contain only one or two or more polyolefin(s). When two or more polyolefins are contained, the total amount thereof is preferably in the above range.

As described above, the layer (B) contains the polyamide resins (b1) and (b2), and the mass ratio (b1/b2) between the content of the polyamide resin (b1) and the content of the polyamide resin (b2) is from 55/45 to 95/5. By blending the polyamide resin (b1), a hollow structure having excellent fuel barrier properties and a small amount of an eluate can be obtained. The adhesion between the layers (A) and (C) is improved by blending the polyamide resin (b2). Furthermore, the mass ratio (b1/b2) between the content of the polyamide resin (b1) and the content of the polyamide resin (b2) is set to the above-described predetermined ratio, and thus the fuel barrier properties and the adhesion can be achieved in a well-balanced manner.

In the polyamide resin (b1), the diamine-derived structural unit contains 70 mol% or more of a structural unit derived from metaxylylenediamine, and the dicarboxylic acid-derived structural unit contains 70 mol% or more of a structural unit derived from an aliphatic dicarboxylic acid having from 4 to 8 carbon atoms. By including the polyamide resin (b1), the fuel barrier properties of the hollow structure are enhanced. In addition, the amount of the eluate can be reduced.

In the polyamide resin (b1), the proportion of the structural unit derived from metaxylylenediamine in the diamine-derived structural unit is preferably 80 mol% or more, more preferably 90 mol% or more, even more preferably 95 mol% or more, and still more preferably 98 mol% or more.

The polyamide resin (b1) may contain a diamine unit other than the structural unit derived from metaxylylenediamine. Examples of the diamine unit include diamine units derived from compounds such as aliphatic diamines such as tetramethylenediamine, pentamethylenediamine, 2-methyl-1,5-pentanediamine, hexamethylenediamine, heptamethylenediamine, octamethylenediamine, nonamethylenediamine, decamethylenediamine, dodecamethylenediamine, and 2,2,4- or 2,4,4-trimethylhexamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl) propane, bis(aminomethyl)decalin, and bis(aminomethyl)tricyclodecane; and diamines having an aromatic ring, such as paraxylylenediamine, bis(4-aminophenyl)ether, paraphenylenediamine, paraxylylenediamine, and bis(aminomethyl)naphthalene. One of these can be used alone, or two or more thereof can be used in combination.

In the polyamide resin (b1), the proportion of the structural unit derived from an aliphatic dicarboxylic acid having from 4 to 8 carbon atoms (preferably, adipic acid) in the dicarboxylic acid-derived structural unit is preferably 80 mol% or more, more preferably 90 mol% or more, even more preferably 95 mol% or more, and still more preferably 98 mol% or more.

The aliphatic dicarboxylic acid having from 4 to 8 carbon atoms is preferably an α,ω-linear aliphatic dicarboxylic acid having from 4 to 8 carbon atoms. The α,ω-linear aliphatic dicarboxylic acid having from 4 to 8 carbon atoms is, for example, succinic acid, glutaric acid, adipic acid, pimelic acid, suberic acid, or the like, and is preferably adipic acid. One of these can be used alone, or two or more thereof can be used in combination.

The polyamide resin (b1) may contain a dicarboxylic acid unit other than the structural unit derived from an aliphatic dicarboxylic acid having from 4 to 8 carbon atoms.

Examples of dicarboxylic acid units other than the structural unit derived from an aliphatic dicarboxylic acid having from 4 to 8 carbon atoms include aliphatic dicarboxylic acids having 3 or less carbon atoms such as oxalic acid and malonic acid; aliphatic carboxylic acids having 9 or more carbon atoms such as azelaic acid, sebacic acid, 1,10-decanedicarboxylic acid, 1,11-undecanedicarboxylic acid, 1,12-dodecanedicarboxylic acid, 1,13-tridecanedicarboxylic acid, and 1,14-tetradecanedicarboxylic acid; and aromatic dicarboxylic acids such as terephthalic acid, isophthalic acid, and 2,6-naphthalenedicarboxylic acid. One of these can be used alone, or two or more thereof can be used in combination.

In the polyamide resin (b2), the diamine-derived structural unit contains 70 mol% or more of a structural unit derived from xylylenediamine, and the dicarboxylic acid-derived structural unit contains 70 mol% or more of a structural unit derived from an aliphatic dicarboxylic acid having from 9 to 12 carbon atoms. By including the polyamide resin (b2), the adhesion between the polyamide resin layers (A) and (C) is improved.

In the polyamide resin (b2), the proportion of the structural unit derived from metaxylylenediamine in the diamine-derived structural unit is preferably 80 mol% or more, more preferably 90 mol% or more, even more preferably 95 mol% or more, and still more preferably 98 mol% or more.

The polyamide resin (b2) may contain a diamine unit other than the structural unit derived from metaxylylenediamine. Examples of the diamine unit include diamine units derived from compounds such as aliphatic diamines such as tetramethylenediamine, pentamethylenediamine, 2-methyl-1,5-pentanediamine, hexamethylenediamine, heptamethylenediamine, octamethylenediamine, nonamethylenediamine, decamethylenediamine, dodecamethylenediamine, and 2,2,4- or 2,4,4-trimethylhexamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl) propane, bis(aminomethyl)decalin, and bis(aminomethyl)tricyclodecane; and diamines having an aromatic ring, such as bis(4-aminophenyl)ether, paraphenylenediamine, paraxylylenediamine, and bis(aminomethyl)naphthalene. One of these can be used alone, or two or more thereof can be used in combination.

In the polyamide resin (b2), the proportion of the structural unit derived from an aliphatic dicarboxylic acid having from 9 to 12 carbon atoms (preferably, sebacic acid) in the dicarboxylic acid-derived structural unit is preferably 80 mol% or more, more preferably 90 mol% or more, even more preferably 95 mol% or more, and still more preferably 98 mol% or more.

The aliphatic dicarboxylic acid having from 9 to 12 carbon atoms is preferably an α,ω-linear aliphatic dicarboxylic acid having from 9 to 12 carbon atoms. Examples of the α,ω-linear aliphatic dicarboxylic acid having from 9 to 12 carbon atoms include azelaic acid, sebacic acid, 1,10-decanedicarboxylic acid, 1,11-undecanedicarboxylic acid, and 1,12-dodecanedicarboxylic acid, and sebacic acid is preferable. One of these can be used alone, or two or more thereof can be used in combination.

The polyamide resin (b2) may contain a dicarboxylic acid unit other than the structural unit derived from an aliphatic dicarboxylic acid having from 9 to 12 carbon atoms.

Examples of the dicarboxylic acid unit other than the structural unit derived from an aliphatic dicarboxylic acid having from 9 to 12 carbon atoms include aliphatic dicarboxylic acids having 8 or less carbon atoms such as succinic acid, glutaric acid, adipic acid, pimelic acid, and suberic acid; and aromatic dicarboxylic acids such as terephthalic acid, isophthalic acid, and 2,6-naphthalenedicarboxylic acid. One of these can be used alone, or two or more thereof can be used in combination.

In the polyamide resin layer (B), the mass ratio (b1/b2) between the content of the polyamide resin (b1) and the content of the polyamide resin (b2) is from 55/45 to 95/5, preferably from 55/45 to 89/11, more preferably from 55/45 to 85/15, and even more preferably from 65/35 to 85/15.

A total content of the polyamide resins (b1) and (b2) in the polyamide resin layer (B) is preferably 60 mass% or more, more preferably 65 mass% or more, even more preferably 75 mass% or more, still more preferably 80 mass% or more, and even still more preferably 85 mass% or more. When the total content is equal to or more than the lower limit value, the fuel barrier properties, a low amount of the eluate, and the adhesion of the polyamide resin layer (B) to the polyamide resin layer (A) or (C) tend to be further improved. In addition, the total content of the polyamide resins (b1) and (b2) in the polyamide resin layer (B) is preferably 95 mass% or less, more preferably 94 mass% or less, even more preferably 93 mass% or less, and still more preferably 92 mass% or less. When the total content is equal to or less than the upper limit value, an impact resistance modifier can be sufficiently added, and the low-temperature impact resistance tends to be more excellent and improved.

The polyamide resin layer (B) may contain one or two or more of each of the polyamide resins (b1) and (b2). When two or more of each of the polyamide resins (b1) and (b2) are contained, the total amount thereof is preferably in the above range.

The polyamide resin layer (B) may contain other components in addition to the above components. Examples of the other components include a thermoplastic resin other than the polyamide resins (b1) and (b2), a conductive substance, a plasticizer, an antioxidant, a heat stabilizer, an ultraviolet absorber, a light stabilizer, a lubricant, an inorganic filler, an antistatic agent, a flame retardant, a crystallization accelerator, and an impact resistance modifier other than the polyolefin. A total content of these other components is preferably 20 mass% or less, more preferably 15 mass% or less, and even more preferably 12 mass% or less.

In the present embodiments, in the polyamide resin layer (B), a total content of the polyamide resin (b1), the polyamide resin (b2), and the polyolefin accounts for preferably 90 mass% or more, more preferably more than 95 mass%, and even more preferably 98 mass% or more of the layer (B).

The polyamide resin layer (B) is preferably substantially free of plasticizer. The term "substantially free" means that the content of the plasticizer is 0.1 mass% or less, preferably 0.05 mass% or less, more preferably 0.03 mass% or less, even more preferably 0.01 mass% or less, and still more preferably 99 mass% or more of the polyamide resin layer (B).

The polyamide resin layer (B) is preferably substantially free of conductive substance. The term "substantially free" means that the content of the conductive substance is 10 mass% or less, preferably 5 mass% or less, more preferably 3 mass% or less, and even more preferably 1 mass% or less of the content of the conductive substance contained in the conductive layer (D).

A thickness of the polyamide resin layer (B) is preferably 3% or more, more preferably 5% or more, even more preferably 10% or more, still more preferably 15% or more, and even still more preferably 18% or more when a total thickness of the hollow structure is defined as 100%. When the thickness is equal to or more than the lower limit value, the fuel barrier properties can be further improved, and the amount of the eluate can be more effectively suppressed. The thickness of the polyamide resin layer (B) is preferably 50% or less, more preferably 45% or less, even more preferably 40% or less, still more preferably 35% or less, and even still more preferably 30% or less when the total thickness of the hollow structure is defined as 100%. When the thickness is equal to or less than the upper limit value, the polyamide resin layer (B) can be laminated with a functional thickness, and both high fuel barrier properties and low-temperature impact resistance tend to be achieved in a well-balanced manner.

Also, the thickness of the polyamide resin layer (B) is preferably 30 µm or more, more preferably 100 µm or more, even more preferably 130 µm or more, still more preferably 150 µm or more, and even still more preferably 180 µm or more. Also, the thickness of the polyamide resin layer (B) is preferably 1000 µm or less, more preferably 800 µm or less, even more preferably 700 µm or less, still more preferably 400 µm or less, and even still more preferably 300 µm or less.

### <Polyamide resin layer (C)>

The polyamide resin layer (C) contains a polyamide resin (c), and 90 mol% or more of all structural units of the polyamide resin (c) are one or more of a structural unit derived from a lactam having from 10 to 12 carbon atoms, a structural unit derived from an aminocarboxylic acid having from 10 to 12 carbon atoms, a structural unit derived from an aliphatic dicarboxylic acid having from 6 to 12 carbon atoms, and a structural unit derived from an aliphatic diamine having from 6 to 12 carbon atoms. By using the polyamide resin layer (C) containing the polyamide resin (c) having such relatively high flexibility, the low-temperature impact resistance can be improved. In addition, adhesion between the polyamide resin layer (C) and the conductive layer (D) can be enhanced. In addition, adhesion between the polyamide resin layer (C) and the conductive layer (D) after the fuel is sealed can be enhanced.

In the polyamide resin (c), 90 mol% or more of all structural units are one or more of a structural unit derived from a lactam having from 10 to 12 carbon atoms, a structural unit derived from an aminocarboxylic acid having from 10 to 12 carbon atoms, a structural unit derived from an aliphatic dicarboxylic acid having from 6 to 12 carbon atoms, and a structural unit derived from an aliphatic diamine having from 6 to 12 carbon atoms, and it is preferable that 95 mol% or more of all the structural units are composed of the above structural units, and it is more preferable that 99 mol% or more of all the structural units are composed of the above structural units.

In addition, in the case where both a structural unit derived from an aliphatic dicarboxylic acid having from 6 to 12 carbon atoms and a structural unit derived from an aliphatic diamine having from 6 to 12 carbon atoms are included, one of the structural units preferably has from 10 to 12 carbon atoms. A hollow structure more excellent in gas barrier properties is obtained by adopting such a configuration.

The polyamide resin (c) more preferably contains the following polyamide resins (c1) and/or (c2), and even more preferably contains the following polyamide resin (c1): The details of the polyamide resins (c1) and (c2) are the same as those of the polyamide resins (a1) and (a2) described above, respectively, and preferred ranges are also the same.

A content of the polyamide resin (c) in the polyamide resin layer (C) is preferably 65 mass% or more, more preferably 70 mass% or more, even more preferably 75 mass% or more, still more preferably 80 mass% or more, and even still more preferably 85 mass% or more. When the content is equal to or more than the lower limit value, the adhesion of the polyamide resin layer (C) to the polyamide resin layer (B) and the conductive layer (D) tends to be more excellent. In addition, the content of the polyamide resin (c) in the polyamide resin layer (C) is preferably 100 mass% or less, and more preferably 95 mass% or less. When the content is equal to or less than the upper limit value, flexibility modifying aids (plasticizer and polyolefin) can be contained in the polyamide resin layer (C), and the impact resistance tends to be excellent.

The polyamide resin layer (C) may contain only one or two or more polyamide resin(s) (c). When two or more polyamide resins (c) are contained, the total amount thereof is preferably in the above range.

The polyamide resin layer (C) may contain a plasticizer. By including a plasticizer in the polyamide resin layer (A), the low-temperature impact resistance can be further improved. In general, it is known that the amount of an eluate increases when the eluate comes out from a resin layer containing a plasticizer to a fuel side, as an eluted product. However, in the present configuration, the amount of the plasticizer contained in the polyamide resin layer (C) can be reduced by laminating the polyamide resin layer (C) thinly, and thus the amount of the eluate from the polyamide resin layer (C) can be substantially suppressed.

The details of the plasticizer are the same as those of the plasticizer described for the polyamide resin layer (A), and preferred ranges are also the same.

When the polyamide resin layer (C) contains a plasticizer, a content of the plasticizer is preferably 1 mass% or more, more preferably 2 mass% or more, even more preferably 3 mass% or more, and still more preferably 4 mass% or more. When the content is equal to or more than the lower limit value, the low-temperature impact resistance tends to be further improved. In addition, the content of the plasticizer in the polyamide resin layer (C) is preferably 20 mass% or less, more preferably 18 mass% or less, even more preferably 16 mass% or less, still more preferably 14 mass% or less, and even still more preferably 12 mass% or less. Furthermore, when the content is equal to or less than the upper limit value, the amount of the plasticizer-derived eluate can be made smaller.

The polyamide resin layer (C) may contain only one or two or more plasticizer(s). When two or more polyolefins are contained, the total amount thereof is preferably in the above range.

The polyamide resin layer (C) may contain other components in addition to the above components. Examples of the other components include a thermoplastic resin other than the polyamide resin (c), a polyolefin, an antioxidant, a heat stabilizer, an ultraviolet absorber, a light stabilizer, a lubricant, an inorganic filler, an antistatic agent, a flame retardant, a crystallization accelerator, and an impact resistance modifier other than the polyolefin. A total content of these other components is preferably 20 mass% or less, more preferably 15 mass% or less, and even more preferably 12 mass% or less.

In the present embodiments, a content of the polyolefin in the polyamide resin layer (C) is preferably from 0 to 12 mass% or less, more preferably from 0 to 7 mass%, and even more preferably from 0 to 6 mass%, and may be from 0 to 3 mass%, further from 0 to 1 mass%, from 0 to 0.1 mass%, or from 0 to 0.01 mass%. As described above, in the hollow structure of the present embodiments, even when the polyolefin is not blended, or is blended in a reduced amount, in the polyamide resin layer (C), a hollow structure having excellent low-temperature impact resistance can be obtained. Therefore, the adhesion of the polyamide resin layer (C) to the conductive layer (D) can also be enhanced.

In the present embodiments, in the polyamide resin layer (C), a total content of the polyamide resin (c) and the plasticizer which is blended as necessary accounts for preferably 90 mass% or more, more preferably 95 mass% or more, even more preferably 98 mass% or more, and still more preferably 99 mass% or more of the layer (C).

The polyamide resin layer (C) is preferably substantially free of conductive substance. The term "substantially free" means that the content of the conductive substance is 0.1 mass% or less, preferably 0.05 mass% or less, more preferably 0.03 mass% or less, and even more preferably 0.01 mass% or less of the conductive substance contained in the conductive layer (D).

A thickness of the polyamide resin layer (C) is preferably 3% or more, more preferably 5% or more, even more preferably 7% or more, still more preferably 8% or more, and even still more preferably 9% or more when a total thickness of the hollow structure is defined as 100%. When the thickness is equal to or more than the lower limit value, the layer thickness tends to be stabilized, and the effect of adhesion tends to be further improved. The thickness of the polyamide resin layer (C) is preferably 20% or less, more preferably 18% or less, even more preferably 17% or less, and still more preferably 16% or less when the total thickness of the hollow structure is defined as 100%. When the thickness is equal to or less than the upper limit value, the hardness of the hollow structure tends to be reduced, and the low-temperature impact resistance tends to be further improved.

Also, the thickness of the polyamide resin layer (C) is preferably 10 µm or more, more preferably 30 µm or more, even more preferably 50 µm or more, still more preferably 70 µm or more, and even still more preferably 80 µm or more. Also, the thickness of the polyamide resin layer (C) is preferably 500 µm or less, more preferably 400 µm or less, even more preferably 300 µm or less, still more preferably 200 µm or less, and even still more preferably 150 µm or less.

### <Conductive layer (D)>

The conductive layer (D) contains a fluororesin and a conductive substance.

It contains a fluororesin, and thus both high flexibility and fuel barrier properties are achieved. It contains a conductive substance, and thus conductivity can be imparted to the hollow structure.

When the conductive layer (D) in the present embodiments is molded into a hollow structure at 280°C, the hollow structure is cut in half, and a resistance value of its inner layer is preferably 30 MΩ/sq. or less, more preferably 20 MΩ/sq or less, and even more preferably 10 MΩ or less, as measured with a resistivity meter. A hollow structure excellent in conductivity can be obtained by employing such a resistance value. A lower limit value of the resistance value is, for example, 0.01 MΩ or more. As the resistivity meter, Loresta-GX MCP-T700, available from Nittoseiko Analytech Co., Ltd., can be used.

The fluororesin is a conductive resin. The fluororesin is also preferably acid-modified. By using the acid-modified fluororesin, the adhesion of the conductive layer (D) to the polyamide resin (c) contained in the polyamide resin layer (C) can be further improved. The acid used in the acid modification is preferably a carboxylic acid or a carboxylic anhydride.

A melting point of the fluororesin is preferably 300°C or lower, more preferably 280°C or lower, and even more preferably 260°C or lower. A lower limit value is not particularly defined, but may be, for example, 100°C or higher. The melting point of the fluororesin is measured according to the description of ISO 11357-3.

Examples of the fluororesin that can be used in the present embodiments include tetrafluoroethylene/perfluoroalkylether copolymer (PFA), polyvinylidene fluoride (PVDF), polytetrafluoroethylene (PTFE), polyvinyl fluoride (PVF), polychlorotrifluoroethylene (PCTFE), tetrafluoroethylene/hexafluoropropylene copolymer (FEP), ethylene/chlorotrifluoroethylene copolymer (ECTFE), vinylidene fluoride/chlorotrifluoroethylene copolymer, ethylene/tetrafluoroethylene copolymer, chlorotrifluoroethylene/tetrafluoroethylene copolymer, vinylidene fluoride/tetrafluoroethylene/hexafluoropropylene copolymer, ethylene/tetrafluoroethylene/hexafluoropropylene copolymer, vinylidene fluoride/tetrafluoroethylene copolymer, vinylidene fluoride/hexafluoropropylene copolymer, vinylidene fluoride/pentafluoropropylene copolymer, tetrafluoroethylene/hexafluoropropylene/vinylidene fluoride copolymer (THV), vinylidene fluoride/pentafluoropropylene/tetrafluoroethylene copolymer, vinylidene fluoride/perfluoroalkylvinylether/tetrafluoroethylene copolymer, and perfluoroalkoxy/tetrafluoromethylene copolymer.

In the present embodiments, in particular, a fluoroethylene (co)polymer is preferably contained, a tetrafluoroethylene (co)polymer or a fluoroethylene propylene copolymer is more preferably contained, and an ethylene/fluoroethylene propylene copolymer (EFEP) is even more preferably contained. Further, these polymers are preferably acid-modified. By using a flexible and acid-modified fluororesin such as a fluoroethylene (co)polymer, low-temperature impact resistance and interlayer barrier properties can be ensured.

The (co)polymer means a homopolymer and/or a copolymer.

A content of the fluororesin in the conductive layer (D) is preferably 85 mass% or more, more preferably 90 mass% or more, even more preferably 95 mass% or more, and still more preferably 97 mass% or more. When the content is equal to or more than the lower limit value, the low-temperature impact resistance tends to be further improved. In addition, the content of the fluororesin in the conductive layer (D) is preferably less than 100 mass%, and may be such an amount that all components other than the conductive substance are the fluororesin. When the content is equal to or less than the upper limit value, low-temperature impact resistance and fuel barrier properties tend to be further improved.

The conductive layer (D) may contain only one or two or more fluororesin(s). When two or more polyolefins are contained, the total amount thereof is preferably in the above range.

The conductive layer (D) contains a conductive substance. By including a conductive substance, the conductivity can be imparted to the hollow structure.

Examples of the conductive substance used in the present embodiments include metals, metal oxides, conductive carbon compounds, and conductive polymers, and conductive carbon compounds are preferable.

The metal is preferably a metal filler, a stainless fiber, or a magnetic filler. Examples of the metal oxide include alumina and zinc oxide, and alumina fibers and zinc oxide nanotubes are preferable. The conductive carbon compound is preferably carbon black, Ketjen carbon, graphene, graphite, fullerenes, carbon nanocoils, carbon nanotubes, or carbon fibers, is more preferably carbon black and/or carbon nanotubes, and is even more preferably carbon black.

A content of the conductive substance in the conductive layer (D) is preferably 0.01 mass% or more, more preferably 0.1 mass% or more, and even more preferably 1 mass% or more in the conductive layer (D). When the content is equal to or more than the lower limit value, conductivity can be effectively imparted to the hollow structure. The content of the conductive substance in the conductive layer (D) is preferably 25 mass% or less, more preferably 20 mass% or less, even more preferably 18 mass% or less, and still more preferably 15 mass% or less in the conductive layer (D).

The conductive layer (D) may contain only one or two or more conductive substance(s). When two or more polyolefins are contained, the total amount thereof is preferably in the above range.

The conductive layer (D) may contain other components in addition to the above components. Examples of the other components include a resin other than the fluororesin, a polyolefin, an antioxidant, a heat stabilizer, an ultraviolet absorber, a light stabilizer, a lubricant, an inorganic filler, an antistatic agent, a flame retardant, a crystallization accelerator, and an impact resistance modifier other than the polyolefin. A total content of these other components is preferably 20 mass% or less, more preferably 15 mass% or less, and even more preferably 12 mass% or less.

In the present embodiments, in the conductive layer (D), a total content of the fluororesin and the conductive substance accounts for preferably 90 mass% or more, more preferably 95 mass% or more, even more preferably 98 mass% or more, and still more preferably 99 mass% or more of the layer (D).

In the present embodiments, a content of the polyolefin in the conductive layer (D) is preferably from 0 to 7 mass%, and more preferably from 0 to 6 mass%, and may be from 0 to 3 mass%, and further from 0 to 1 mass%. As described above, in the present embodiments, even when the polyolefin is not blended, or is blended in a reduced amount, in the conductive layer (D), a hollow structure having excellent low-temperature impact resistance can be obtained by using the fluororesin.

A thickness of the conductive layer (D) is preferably 3% or more, more preferably 5% or more, even more preferably 7% or more, still more preferably 8% or more, and even still more preferably 9% or more when a total thickness of the hollow structure is defined as 100%. When the thickness is equal to or more than the lower limit value, the thickness of the conductive layer tends to be stabilized, and the effect of conductivity tends to be further improved. The thickness of the conductive layer (D) is preferably 20% or less, more preferably 18% or less, even more preferably 17% or less, still more preferably 16% or less, and even still more preferably 15% or less, when the total thickness of the hollow structure is defined as 100%. When the thickness is equal to or less than the upper limit value, superiority tends to be exerted in terms of cost.

Also, the thickness of the conductive layer (D) is preferably 10 µm or more, more preferably 30 µm or more, even more preferably 50 µm or more, still more preferably 70 µm or more, and even still more preferably 80 µm or more. Also, the thickness of the conductive layer (D) is preferably 500 µm or less, more preferably 400 µm or less, even more preferably 300 µm or less, still more preferably 200 µm or less, and even still more preferably 150 µm or less.

### <Relationship among respective layers>

The thicknesses of the polyamide resin layer (A), the polyamide resin layer (B), and the polyamide resin layer (C) in the hollow structure of the present embodiments are preferably such that the thickness of the layer (A) > the thickness of the layer (B) > the thickness of the layer (C).

Furthermore, a thickness of the layer (A)/thickness of the layer (C), which is a ratio of the thickness of the layer (A) to the thickness of the layer (C), is preferably 3.0 times or more, more preferably 3.5 times or more, even more preferably 4.0 times or more, still more preferably 4.5 times or more, even still more preferably 5.0 times or more, and further even still more preferably 5.5 times or more. When the ratio is equal to or more than the lower limit value, for example, even when the polyamide resin layer (C) does not contain the polyolefin or contains the polyolefin in a small amount and is hard, the hardness thereof tends to be reduced and the low-temperature impact resistance tends to be further improved. Also, the thickness of the layer (A)/thickness of the layer (C) is preferably 9.0 times or less, more preferably 8.5 times or less, even more preferably 8.0 times or less, still more preferably 7.5 times or less, even still more preferably 7.0 times or less, and further even still more preferably 6.5 times or less. When the ratio is equal to or less than the upper limit value, a sufficient thickness of the layer (C) can be obtained, and the adhesion between the layer (B) and the layer (D) tends to be further improved.

Furthermore, a thickness of the layer (B)/thickness of the layer (C), which is a ratio of the thickness of the layer (B) to the thickness of the layer (C), is preferably more than 1.0 time, more preferably 1.2 times or more, even more preferably 1.4 times or more, still more preferably 1.6 times or more, and even still more preferably 1.8 times or more. When the ratio is equal to or more than the lower limit value, the fuel barrier properties and the effect of decreasing the amount of the eluate tend to be further improved. The thickness of the layer (B)/thickness of the layer (C) is preferably 3.0 times or less, more preferably 2.8 times or less, and even more preferably 2.6 times or less. When the ratio is equal to or less than the upper limit value, a thickness of the layer (C) sufficient to exert its function can be obtained, and the adhesion between the layer (B) and the layer (D) tends to be further improved.

When the hollow structure of the present embodiments has two or more layers (A), at least one of the two or more layers (A) only has to satisfy the above-described relationship, but it is preferable that all the layers satisfy the above-described relationship. The same applies to the layers (B) to (D).

In the present embodiments, even when the thicknesses of the conductive layer (D) and the layer (C) are equally reduced, necessary conductivity, fuel barrier properties, low-temperature impact resistance, and interlayer adhesion can be kept.

In the hollow structure of the present embodiments, it is particularly preferable that the thickness of the layer (A)/thickness of the layer (C), which is the ratio of the thickness of the polyamide resin layer (A) to the thickness of the polyamide resin layer (C), is from 3.0 to 9.0 times; that the thickness of the layer (B)/thickness of the layer (C), which is the ratio of the thickness of the polyamide resin layer (B) to the thickness of the polyamide resin layer (C), is more than 1.0 times and 3.0 times or less; that the polyamide resin layer (A) contains a polyolefin; that each polyolefin contained in the polyamide resin layer (A) and the polyamide resin layer (B) is an acid-modified polyolefin; and that a content of the polyolefin contained in the polyamide resin layer (C) is from 0 to 7 mass%.

The polyamide resin layer (C) contains the polyamide resin (c), and thus the adhesion of the polyamide resin layer (C) to the polyamide resin layer (B) can be enhanced. In addition, since the polyamide resin layer (C) has a reduced thickness and uses a polyamide resin having a relatively long chain, that is, a polyamide resin having relatively high impact resistance, low-temperature impact resistance can be achieved even when no polyolefin is contained therein. Since no polyolefin is contained in the polyamide resin layer (C) or the content thereof can be reduced, the adhesion of the polyamide resin layer (C) to the conductive layer (D) can also be achieved.

A total thickness of the hollow structure of the present embodiments is not particularly limited as long as it is appropriately set according to the application, but is preferably 10 µm or more, more preferably 100 µm or more, even more preferably 500 µm or more, and still more preferably 700 µm or more. An upper limit of the total thickness is preferably 5 mm or less, more preferably 3 mm or less, even more preferably 2 mm or less, and still more preferably 1.5 mm or less.

The hollow structure of the present embodiments can be suitably used as a fuel transportation piping material or the like. For example, it is particularly suitable as a fuel transportation piping material for alkanes such as hexane and octane; aromatic compounds such as toluene and benzene; alcohols such as methanol and ethanol; alcohol gasoline obtained by mixing isooctane, toluene and alcohol; and the like.

The hollow structure of the present embodiments can be produced by melt extrusion using an extruder, extrusion into a cylindrical shape through an annular die, shaping through a sizing former that controls the size, cooling in a water tank or the like, and winding up with a take-up machine.

Specifically, it can be produced by a method (coextrusion method) in which the materials constituting the layers (A), (B), (C), and (D) are each melt-extruded using an extruder, and the extruded products are each fed into a die to form annular streams, which are then simultaneously extruded to the inside or outside of the die to laminate the layers, or a method(coating method) in which a single-layer hollow molded product is produced and laminated while integrating a resin using an adhesive on the outside as necessary. The conductive substance is preferably blended into the fluororesin after being made into a master batch with a thermoplastic resin. The thermoplastic resin to be used in the formation of a master batch is preferably a fluororesin.

At least a part of the hollow structure of the present embodiments may have a wavy region. Here, the wavy region refers to a region formed in a wavy shape, a bellows shape, an accordion shape, a corrugated shape, or the like. The hollow structure having the corrugated region can be easily formed by molding a formed straight tubular hollow structure, and then forming a predetermined wavy shape. Further, for example, a necessary component such as a connector may be added to the hollow structure, or the hollow structure may be formed into a shape such as an L shape or a U shape by bending.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

### Raw Material

### <Polyamide resin layer (A)>

### Polyamide resin (a)

PA12: Polyamide 12, UBESTA3030U, available from Ube Industries, Ltd.
PA1010: Polyamide 1010, "Rilsan" TESN P213TL, available from Arkema S.A.
PA11: Polyamide 11, "Rilsan" P20TLD, available from Arkema S.A.
PA612: Polyamide 612, UBESTA7024B, available from Ube Industries, Ltd.

### Plasticizer

BBSA: N-butylbenzenesulfonamide, BM-4, available from Daihachi Chemical Industry Co., Ltd.

### Polyolefin

PO: 1 Mass% maleic anhydride-modified ethylene/butene copolymer, TAFMER MH5020, available from Mitsui Chemicals, Inc.

### <Polyamide resin layer (B)>

### Polyamide resin (b1)

MXD6: Synthesized according to the following synthesis example.

Precisely weighed 9000 g (61.6 mol) of adipic acid, 2.6 g of sodium hypophosphite monohydrate, and 1.0 g of sodium acetate were placed in a pressure-resistant reaction vessel having an internal volume of 50 L and equipped with a stirrer, a partial condenser, a total condenser, a pressure regulator, a thermometer, a dropping funnel and a pump, an aspirator, a nitrogen inlet tube, a bottom drain valve, and a strand die. The reaction vessel was thoroughly purged with nitrogen and then sealed, and the temperature was increased to 190°C under stirring while the pressure in the vessel was maintained at 0.4 MPa. After the temperature reached 190°C, dropwise addition of 8480 g (62.2 mol) of metaxylylenediamine stored in the dropping funnel, into the raw materials in the reaction vessel, was initiated, and the temperature in a reaction tank was raised to 250°C while condensed water that was produced was removed from the system and while the pressure in the vessel was maintained at 0.4 MPa. After the completion of dropwise addition of metaxylylenediamine, the pressure in the reaction vessel was gradually returned to normal pressure while the temperature was gradually raised to 260°C, and then an aspirator was used to reduce the pressure inside the reaction tank to 80 kPa and remove the condensed water. Agitation torque of the stirrer was observed under a reduced pressure, and agitation was terminated when a predetermined torque was reached. Then, the inside of the reaction tank was pressurized with nitrogen, the bottom drain valve was opened, and the polymer was extruded from the strand die to form a strand and then cooled and pelletized by using a pelletizer to obtain MXD6.

### Polyamide resin (b2)

MXD10: Synthesized according to the following synthesis example.

### <Synthesis Example of MXD10>

Precisely weighed 12564 g (62.2 mol) of sebacic acid, 3.2 g of sodium hypophosphite monohydrate, and 1.3 g of sodium acetate were placed in a pressure-resistant reaction vessel having an internal volume of 50 L and equipped with a stirrer, a partial condenser, a total condenser, a pressure regulator, a thermometer, a dropping funnel and a pump, an aspirator, a nitrogen inlet tube, a bottom drain valve, and a strand die. The reaction vessel was thoroughly purged with nitrogen and then sealed, and the temperature was increased to 190°C under stirring while the pressure in the vessel was maintained at 0.4 MPa. After the temperature reached 190°C, dropwise addition of 8480 g (62.2 mol) of metaxylylenediamine stored in the dropping funnel, into the raw materials in the reaction vessel, was initiated, and the temperature in a reaction tank was raised to 250°C while condensed water that was produced was removed from the system and while the pressure in the vessel was maintained at 0.4 MPa. After the completion of dropwise addition of metaxylylenediamine, the pressure in the reaction vessel was gradually returned to normal pressure while the temperature was gradually raised to 260°C, and then an aspirator was used to reduce the pressure inside the reaction tank to 80 kPa and remove the condensed water. Agitation torque of the stirrer was observed under a reduced pressure, and agitation was terminated when a predetermined torque was reached. Then, the inside of the reaction tank was pressurized with nitrogen, the bottom drain valve was opened, and the polymer was extruded from the strand die to form a strand and then cooled and pelletized by using a pelletizer to obtain MXD10.

### Polyolefin

PO: 1 Mass% maleic anhydride-modified ethylene/butene copolymer (TAFMER MH5020, available from Mitsui Chemicals, Inc.)

### <Polyamide resin layer (C)>

### Polyamide resin (c)

PA12: Polyamide 12, UBESTA3030U, available from Ube Industries, Ltd.
PA1010: Polyamide 1010, "Rilsan" TESN P213TL, available from Arkema S.A.
PA612: Polyamide 612, UBESTA7024B, available from Ube Industries, Ltd.
PA11: Polyamide 11, "Rilsan" P20TLD, available from Arkema S.A.

### Plasticizer

BBSA: N-butylbenzenesulfonamide, BM-4, available from Daihachi Chemical Industry Co., Ltd.

### Polyolefin

PO: 1 Mass% maleic anhydride-modified ethylene/butene copolymer, TAFMER MH5020, available from Mitsui Chemicals, Inc.

### <Conductive layer (D)>

### Conductive resin:

EFEP: conductive carbon compound-containing acid-modified ethylene/tetrafluoroethylene propylene copolymer (EFEP): RPS-5000AS, available from Daikin Industries, Ltd.

### Examples 1 to 18 and Comparative Examples 1 to 7

### <Production of polyamide resin layer (A)>

The polyamide resin (a) was mixed with the polyolefin (PO) in advance so as to attain the mass proportions indicated in Tables 1 to 5, and the mixture was fed to a twin-screw melt-kneader having a screw diameter of φ34 mm and provided with a kneading disc, and melt-kneaded at a cylinder temperature of from 180°C to 240°C. BBSA as a plasticizer was injected into the middle of a cylinder of the twin-screw melt-kneader by a metering pump, and the molten resin was extruded in a strand shape, which was then introduced into a water tank, cooled, cut, and vacuum dried to obtain a composition (pellet) for forming the polyamide resin layer (A).

### <Production of polyamide resin layer (B)>

The polyamide resins (b1) and (b2) and the polyolefin (PO) were mixed in advance so as to attain the mass proportions indicated in Tables 1 to 5, and the mixture was fed to a twin-screw melt-kneader having a screw diameter of φ34 mm and provided with a kneading disc, and melt-kneaded at a cylinder temperature of from 180°C to 260°C. The molten resin was extruded in a strand shape, then introduced into a water tank, cooled, cut, and vacuum dried to obtain a composition (pellet) for forming the polyamide resin layer (B).

### <Production of polyamide resin layer (C)>

The polyamide resin (C) was mixed with the polyolefin (PO) in advance, as necessary, so as to attain the mass proportions indicated in Tables 1 to 5, and the mixture was fed to a twin-screw melt-kneader having a screw diameter of φ34 mm and provided with a kneading disc, and melt-kneaded at a cylinder temperature of from 180°C to 240°C. BBSA as a plasticizer was injected, as necessary, into the middle of a cylinder of the twin-screw melt-kneader by a metering pump, and the molten resin was extruded in a strand shape, which was then introduced into a water tank, cooled, cut, and vacuum dried to obtain a composition (pellet) for forming the polyamide resin layer (C).

### <Production of hollow structure>

A multilayer hollow structure (outer diameter: 8 mm, inner diameter: 6 mm) including layer (A)/layer (B)/layer (C)/layer (D) in this order from the outside was formed, by means of a multilayer hollow structure molding machine equipped with five extruders, using the composition for forming the polyamide resin layer (A), the composition for forming the polyamide resin layer (B), the composition for forming the polyamide resin layer (C), and the composition for forming the conductive layer (D) at an extrusion temperature of 240°C for the layer (A), an extrusion temperature of 260°C for the layer (B), an extrusion temperature of 240°C for the layer (C), an extrusion temperature of 280°C for the layer (D), and a post-lamination flow channel temperature of 280°C. In Comparative Example 6, a multilayer hollow structure including the layer (A)/layer (C)/layer (D) (outer diameter: 8 mm, inner diameter: 6 mm) was used. In Comparative Example 7, a multilayer hollow structure including the layer (A)/layer (B)/layer (D) (outer diameter: 8 mm, inner diameter: 6 mm) was used. The thickness of each layer was as indicated in Tables 1 to 5.

### <Low-temperature impact resistance>

The low-temperature impact resistance of the obtained multilayer hollow structure was evaluated by the following method.

The hollow structure obtained above was allowed to stand for 4 hours under the condition of -40°C, then a weight of 0.9 kg was dropped from a height of 300 mm to confirm whether a crack occurred, and the low-temperature impact resistance was evaluated as follows. C or higher is a practical level.
A: There was no crack in five hollow structures.
B: One or two out of five hollow structures was/were cracked.
C: Three or four out of five hollow structures were cracked.
D: Five out of five hollow structures were cracked.

### <Fuel barrier properties>

About 9 mL of CE10 (isooctane/toluene/ethanol = 45/45/10, volume ratio) was sealed in 33 cm of the multilayer hollow structure prepared above, and the structure was allowed to stand in an atmosphere of 60°C. After sealing, the weight change of the multilayer hollow structure was measured after 100 hours, and an amount of CE10 permeated in 1 m² per day was calculated.

Evaluation was made as follows. B or higher is a practical level.
A: 10 g/m²·day or less
B: More than 10 g/m²·day and 15 g/m ²·day or less
C: More than 15 g/m ²·day and 20 g/m²·day or less
D: More than 20 g/m²·day.

### <Interlayer adhesion (T-peel test)>

About 9 mL of CE10 was sealed in 33 cm of the multilayer hollow structure prepared above, and the structure was allowed to stand in an atmosphere of 60°C for 100 hours. After allowing the structure at room temperature and cooling it, CE10 was removed from the multilayer hollow structure, and the adhesion between the layer (A) and the layer (B), the adhesion between the layer (B) and the layer (C), and the adhesion between the layer (C) and the layer (D) were evaluated as follows. In Comparative Examples 6 and 7 in which the layer (B) was not provided, the adhesion was not evaluated.

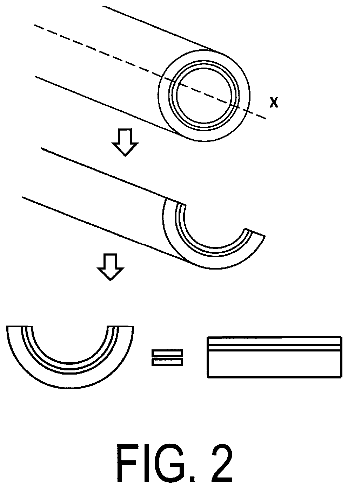

As indicated in the image diagram of FIG. 2, the multilayer hollow structure was cut in half at a cross section (X in FIG. 2) passing through the diameter in the longitudinal direction of the multilayer hollow structure to form a flat plate-shaped multilayer body including the polyamide resin layer (A)/the polyamide resin layer (B)/the polyamide resin layer (C)/the polyamide resin layer (D). The polyamide resin layer (A) side and the polyamide resin layer (B), and the polyamide resin layer (B), the polyamide resin layer (C), and the polyamide resin layer (D) of the flat plate-shaped multilayer body were peeled off from each other using tweezers. In the configuration in which peeling occurred between the layers, the end of each peeled surface (polyamide resin (A) layer and polyamide resin (B) layer, polyamide resin (B) layer and polyamide resin (C) layer, or polyamide resin (C) layer and polyamide resin (D) layer) was fixed with a chuck, and the peel strength (T peel) was measured under the following conditions using a tensile tester so as to pull each other. The result with the lowest value from the respective results of the interlayer adhesion was taken as interlayer adhesion of the configuration.
Test speed: 50 mm/min
Test environment: 23°C/50% relative humidity (RH)
Peeling angle: 90°C

Evaluation was made as follows. C or higher is a practical level.
A: Unpeelable (or peel stress of 20 N or more)
B: Peel stress of 15 N/cm or more and less than 20 N/cm
C: Peel stress 10 N/cm or more and less than 15 N/cm
D: Peel stress of less than 10 N/cm

**[Table 1]**

| | | Example 1 | Example 2 | Example 3 | Example 4 | Example 5 |
|---|---|---|---|---|---|---|
| Polyamide resin layer (A) | Resin (a) species | PA12 | PA12 | PA12 | PA12 | PA12 |
| | Amount of resin (a) | 75 | 75 | 75 | 75 | 75 |
| | Plasticizer species | BBSA | BBSA | BBSA | BBSA | BBSA |
| | Plasticizer amount | 10 | 10 | 10 | 10 | 10 |
| | PO amount | 15 | 15 | 15 | 15 | 15 |
| | Layer thickness | 600 | 600 | 600 | 600 | 600 |
| Polyamide resin layer (B) | (b1) MXD6 amount | 81 | 72 | 68 | 64 | 56 |
| | (b2) MXD10 amount | 9 | 18 | 12 | 16 | 14 |
| | (b1)/(b2) Ratio | 90/10 | 80/20 | 80/20 | 80/20 | 80/20 |
| | Added PO amount | 10 | 10 | 15 | 20 | 30 |
| | Layer thickness | 200 | 200 | 200 | 200 | 200 |
| Polyamide resin layer (C) | Resin (c) species | PA12 | PA12 | PA12 | PA12 | PA12 |
| | Amount of resin (c) | 90 | 90 | 90 | 90 | 90 |
| | Plasticizer species | BBSA | BBSA | BBSA | BBSA | BBSA |
| | Plasticizer amount | 10 | 10 | 10 | 10 | 10 |
| | PO amount | - | - | - | - | - |
| | Layer thickness | 100 | 100 | 100 | 100 | 100 |
| Conductive layer (D) | Layer thickness | 100 | 100 | 100 | 100 | 100 |
| Low-temperature impact resistance | | A | A | A | A | A |
| Fuel barrier properties | | A | A | A | B | B |
| Interlayer adhesion | | A | A | A | A | A |

**[Table 2]**

| | | Example 6 | Example 7 | Example 8 | Example 9 | Example 10 |
|---|---|---|---|---|---|---|
| Polyamide resin layer (A) | Resin (a) species | PA12 | PA12 | PA12 | PA12 | PA12 |
| | Amount of resin (a) | 75 | 75 | 75 | 75 | 75 |
| | Plasticizer species | BBSA | BBSA | BBSA | BBSA | BBSA |
| | Plasticizer amount | 10 | 10 | 10 | 10 | 10 |
| | PO amount | 15 | 15 | 15 | 15 | 15 |
| | Layer thickness | 600 | 600 | 600 | 600 | 600 |
| Polyamide resin layer (B) | (b1) MXD6 amount | 63 | 54 | 68 | 68 | 68 |
| | (b2) MXD10 amount | 27 | 36 | 12 | 12 | 12 |
| | (b1)/(b2) Ratio | 70/30 | 60/40 | 80/20 | 80/20 | 80/20 |
| | Added PO amount | 10 | 10 | 15 | 15 | 15 |
| | Layer thickness | 200 | 200 | 200 | 200 | 200 |
| Polyamide resin layer (C) | Resin (c) species | PA12 | PA12 | PA1010 | PA612 | PA11 |
| | Amount of resin (c) | 90 | 90 | 90 | 90 | 90 |
| | Plasticizer species | BBSA | BBSA | BBSA | BBSA | BBSA |
| | Plasticizer amount | 10 | 10 | 10 | 10 | 10 |
| | PO amount | - | - | - | - | - |
| | Layer thickness | 100 | 100 | 100 | 100 | 100 |
| Conductive layer (D) | Layer thickness | 100 | 100 | 100 | 100 | 100 |
| Low-temperature impact resistance | | A | A | A | A | A |
| Fuel barrier properties | | A | B | A | A | A |
| Interlayer adhesion | | A | A | A | A | A |

**[Table 3]**

| | | Example 11 | Example 12 | Example 13 | Example 14 | Example 15 |
|---|---|---|---|---|---|---|
| Polyamide resin layer (A) | Resin (a) species | PA12 | PA12 | PA1010 | PA11 | PA612 |
| | Resin (a) amount | 75 | 75 | 75 | 80 | 75 |
| | Plasticizer species | BBSA | BBSA | BBSA | BBSA | BBSA |
| | Plasticizer amount | 10 | 10 | 10 | 5 | 10 |
| | PO amount | 15 | 15 | 15 | 15 | 15 |
| | Layer thickness | 600 | 600 | 600 | 600 | 600 |
| Polyamide resin layer (B) | (b1) MXD6 amount | 72 | 72 | 72 | 72 | 72 |
| | (b2) MXD10 amount | 18 | 18 | 18 | 18 | 18 |
| | (b1)/(b2) Ratio | 80/20 | 80/20 | 80/20 | 80/20 | 80/20 |
| | Added PO amount | 10 | 10 | 10 | 10 | 10 |
| | Layer thickness | 200 | 200 | 200 | 200 | 200 |
| Polyamide resin layer (C) | Resin (c) species | PA12 | PA12 | PA12 | PA12 | PA12 |
| | Amount of resin (c) | 95 | 100 | 90 | 90 | 90 |
| | Plasticizer species | BBSA | - | BBSA | BBSA | BBSA |
| | Plasticizer amount | - | - | 10 | 10 | 10 |
| | PO amount | 5 | - | - | - | - |
| | Layer thickness | 100 | 100 | 100 | 100 | 100 |
| Conductive layer (D) | Layer thickness | 100 | 100 | 100 | 100 | 100 |
| Low-temperature impact resistance | | A | A | A | A | A |
| Fuel barrier properties | | A | A | A | A | A |
| Interlayer adhesion | | A | A | A | A | A |

**[Table 4]**

| | | Example 16 | Example 17 | Example 18 | Comparative Example 1 | Comparative Example 2 |
|---|---|---|---|---|---|---|
| Polyamide resin layer (A) | Resin (a) species | PA12 | PA12 | PA12 | PA12 | PA12 |
| | Amount of resin (a) | 75 | 75 | 75 | 75 | 75 |
| | Plasticizer species | BBSA | BBSA | BBSA | BBSA | BBSA |
| | Plasticizer amount | 10 | 10 | 10 | 10 | 10 |
| | PO amount | 15 | 15 | 15 | 15 | 15 |
| | Layer thickness | 600 | 550 | 550 | 600 | 600 |
| Polyamide resin layer (B) | (b1) MXD6 amount | 68 | 68 | 68 | 90 | 36 |
| | (b2) MXD10 amount | 12 | 12 | 12 | 0 | 54 |
| | (b1)/(b2) Ratio | 80/20 | 80/20 | 80/20 | 100/0 | 40/60 |
| | Added PO amount | 10 | 10 | 10 | 10 | 10 |
| | Layer thickness | 200 | 350 | 200 | 200 | 200 |
| Polyamide resin layer (C) | Resin (c) species | PA12 | PA12 | PA12 | PA12 | PA12 |
| | Amount of resin (c) | 80 | 90 | 90 | 90 | 90 |
| | Plasticizer species | BBSA | BBSA | BBSA | BBSA | BBSA |
| | Plasticizer amount | 10 | 10 | 10 | 10 | 10 |
| | PO amount | 10 | - | - | - | - |
| | Layer thickness | 100 | 100 | 250 | 100 | 100 |
| Conductive layer (D) | Layer thickness | 100 | 100 | 100 | 100 | 100 |
| Low-temperature impact resistance | | C | C | C | D | A |
| Fuel barrier properties | | A | A | A | A | C |
| Interlayer adhesion | | A | A | A | D | A |

**[Table 5]**

| | | Comparative Example 3 | Comparative Example 4 | Comparative Example 5 | Comparative Example 6 | Comparative Example 7 |
|---|---|---|---|---|---|---|
| Polyamide resin layer (A) | Resin (a) species | PA12 | PA12 | PA12 | PA12 | PA12 |
| | Amount of resin (a) | 75 | 75 | 75 | 75 | 75 |
| | Plasticizer species | BBSA | BBSA | BBSA | BBSA | BBSA |
| | Plasticizer amount | 10 | 10 | 10 | 10 | 10 |
| | PO amount | 15 | 15 | 15 | 15 | 15 |
| | Layer thickness | 600 | 600 | 600 | 800 | 700 |
| Polyamide resin layer (B) | (b1) MXD6 amount | 0 | 80 | 40 | - | 81 |
| | (b2) MXD10 amount | 90 | 20 | 10 | - | 9 |
| | (b1)/(b2) Ratio | 0/100 | 80/20 | 80/20 | - | 80/20 |
| | Added PO amount | 10 | 0 | 50 | - | 10 |
| | Layer thickness | 200 | 200 | 200 | - | 200 |
| Polyamide resin layer (C) | Resin (c) species | PA12 | PA12 | PA12 | PA12 | - |
| | Amount of resin (c) | 90 | 90 | 90 | 90 | - |
| | Plasticizer species | BBSA | BBSA | BBSA | BBSA | - |
| | Plasticizer amount | 10 | 10 | 10 | 10 | - |
| | PO amount | - | - | - | - | - |
| | Layer thickness | 100 | 100 | 100 | 100 | - |
| Conductive layer (D) | Layer thickness | 100 | 100 | 100 | 100 | 100 |
| Low-temperature impact resistance | | A | D | Unmoldable | A | D |
| Fuel barrier properties | | D | A | | D | A |
| Interlayer adhesion | | A | A | | - | - |

As is clear from the above results, the hollow structure for fuel of the present invention was excellent in fuel barrier properties and interlayer adhesion after an elapse of 100 hours from sealing of CE10 and also excellent in low-temperature impact resistance (Examples 1 to 18).

In particular, in the present invention, by making the thickness of the polyamide resin layer (C) smaller than those of the polyamide resin layers (A) and (B) and by using a polyamide resin having a relatively long chain in the polyamide resin layer (C), the low-temperature impact resistance could be effectively improved even when no polyolefin was contained therein. Furthermore, the polyamide resin layer (C) did not contain the polyolefin or the content thereof could be reduced, and the adhesion of the polyamide resin layer (C) to the conductive layer (D) could also be achieved (comparison between Example 2 and the like and Examples 16 to 18).

Meanwhile, when the polyamide resin layer (B) did not contain the polyamide resin (b2), the low-temperature impact resistance and interlayer adhesion were poor (Comparative Example 1).

In addition, when the proportion of the polyamide resin (bl) in the polyamide resin layer (B) was low, when the polyamide resin layer (B) did not contain the polyamide resin (b1), or further when the polyamide resin layer (B) was absent, the fuel barrier properties were poor (Comparative Examples 2, 3, and 6).

On the other hand, when the polyamide resin layer (B) did not contain the polyolefin, the low-temperature impact resistance was poor (Comparative Example 4).

When the content of the polyolefin in the polyamide resin layer (B) was too high, a multilayer body could not be molded (Comparative Example 5).

When the polyamide resin layer (C) was absent, the low-temperature impact resistance and interlayer adhesion were poor (Comparative Example 7).

### Reference Signs List

A: Polyamide resin layer (A)
B: Polyamide resin layer (B)
C: Polyamide resin layer (C)
D: Conductive layer (D)

## Claims

1. A hollow structure for fuel, comprising a polyamide resin layer (A), a polyamide resin layer (B), a polyamide resin layer (C), and a conductive layer (D) in this order from an outside,
wherein the polyamide resin layer (A) comprises a polyamide resin (a), 90 mol% or more of all structural units of the polyamide resin (a) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms,
wherein the polyamide resin layer (B) comprises a polyolefin, a polyamide resin (bl), and a polyamide resin (b2); a content of the polyolefin is from 5 to 40 mass% of the polyamide resin layer (B); a mass ratio (bl/b2) between a content of the polyamide resin (b1) and a content of the polyamide resin (b2) is from 55/45 to 95/5, the polyamide resin (b1) comprising: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms, the polyamide resin (b2) comprising: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms,
wherein the polyamide resin layer (C) comprises a polyamide resin (c),
90 mol% or more of all structural units of the polyamide resin (c) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms, and
wherein the conductive layer (D) comprises a fluororesin and a conductive substance.

2. The hollow structure for fuel according to claim 1, wherein the polyamide resin layer (A) comprises a polyolefin.

3. The hollow structure for fuel according to claim 2, wherein the polyolefin contained in the polyamide resin layer (A) and the polyolefin contained in the polyamide resin layer (B) are each an acid-modified polyolefin.

4. The hollow structure for fuel according to any one of claims 1 to 3, wherein a content of the polyolefin contained in the polyamide resin layer (C) is from 0 to 7 mass%.

5. The hollow structure for fuel according to any one of claims 1 to 4, wherein a thickness of the layer (A)/a thickness of the layer (C), which is a ratio of the thickness of the polyamide resin layer (A) to the thickness of the polyamide resin layer (C), is from 3.0 to 9.0 times, and a thickness of the layer (B)/a thickness of the layer (C), which is a ratio of the thickness of the polyamide resin layer (B) to the thickness of the polyamide resin layer (C), is from 1.0 to 3.0 times.

6. The hollow structure for fuel according to claim 5, wherein the polyamide resin layer (A) comprises a polyolefin, each polyolefin contained in the polyamide resin layer (A) and the polyamide resin layer (B) is an acid-modified polyolefin, and a content of the polyolefin contained in the polyamide resin layer (C) is from 0 to 7 mass%.

7. The hollow structure for fuel according to any one of claims 1 to 6, wherein, in the polyamide resin layer (B), a total of the polyolefin, the polyamide resin (bl), and the polyamide resin (b2) accounts for more than 95 mass% of the polyamide resin layer (B).

8. The hollow structure for fuel according to any one of claims 1 to 7, wherein the fluororesin comprises a fluoroethylene (co)polymer.

9. The hollow structure for fuel according to any one of claims 1 to 7, wherein the fluororesin comprises an ethylene/fluoroethylene propylene copolymer.

10. The hollow structure for fuel according to any one of claims 1 to 9, wherein the conductive substance comprises a conductive carbon compound.

11. The hollow structure for fuel according to any one of claims 1 to 10, wherein the polyamide resin layer (A) comprises a plasticizer in a proportion of from 1 to 20 mass% in the polyamide resin layer (A).

12. The hollow structure for fuel according to any one of claims 1 to 11, wherein the polyamide resin layer (C) comprises a plasticizer in a proportion of from 1 to 20 mass% in the polyamide resin layer (C).

## Patentansprüche

1. Eine Hohlstruktur für Brennstoff, umfassend eine Polyamidharzschicht (A), eine Polyamidharzschicht (B), eine Polyamidharzschicht (C) und eine leitfähige Schicht (D) in dieser Reihenfolge von außen,
wobei die Polyamidharzschicht (A) ein Polyamidharz (a) umfasst, wobei 90 Mol-% oder mehr aller Struktureinheiten des Polyamidharzes (a) eine oder mehrere aus: einer Struktureinheit, die von einem Lactam mit 10 bis 12 Kohlenstoffatomen abgeleitet ist;
einer Struktureinheit, die von einer Aminocarbonsäure mit 10 bis 12 Kohlenstoffatomen abgeleitet ist; einer Struktureinheit, die von einer aliphatischen Dicarbonsäure mit 6 bis 12 Kohlenstoffatomen abgeleitet ist; und einer Struktureinheit, die von einem aliphatischen Diamin mit 6 bis 12 Kohlenstoffatomen abgeleitet ist, sind,
wobei die Polyamidharzschicht (B) ein Polyolefin, ein Polyamidharz (b1) und ein Polyamidharz (b2) umfasst; ein Gehalt des Polyolefins 5 bis 40 Massen-% der Polyamidharzschicht (B) beträgt; ein Massenverhältnis (b1/b2) zwischen einem Gehalt des Polyamidharzes (b1) und einem Gehalt des Polyamidharzes (b2) 55/45 bis 95/5 beträgt, wobei das Polyamidharz (b1) umfasst: eine von einem Diamin abgeleitete Struktureinheit, die 70 Mol-% oder mehr einer von Metaxylylendiamin abgeleiteten Struktureinheit enthält; und eine von einer Dicarbonsäure abgeleitete Struktureinheit, die 70 Mol-% oder mehr einer von einer aliphatischen Dicarbonsäure mit 4 bis 8 Kohlenstoffatomen abgeleiteten Struktureinheit enthält, wobei das Polyamidharz (b2) umfasst: eine von einem Diamin abgeleitete Struktureinheit, die 70 Mol-% oder mehr einer von Xylylendiamin abgeleiteten Struktureinheit enthält; und eine von einer Dicarbonsäure abgeleitete Struktureinheit, die 70 Mol-% oder mehr einer von einer aliphatischen Dicarbonsäure mit 9 bis 12 Kohlenstoffatomen abgeleiteten Struktureinheit enthält,
wobei die Polyamidharzschicht (C) ein Polyamidharz (c) umfasst,
wobei 90 Mol-% oder mehr aller Struktureinheiten des Polyamidharzes (c) eine oder
mehrere aus: einer Struktureinheit, die von einem Lactam mit 10 bis 12 Kohlenstoffatomen abgeleitet ist; einer Struktureinheit, die von einer Aminocarbonsäure mit 10 bis 12 Kohlenstoffatomen abgeleitet ist; einer Struktureinheit, die von einer aliphatischen Dicarbonsäure mit 6 bis 12 Kohlenstoffatomen abgeleitet ist; und einer Struktureinheit, die von einem aliphatischen Diamin mit 6 bis 12 Kohlenstoffatomen abgeleitet ist, sind, und
wobei die leitfähige Schicht (D) ein Fluorharz und eine leitfähige Substanz umfasst.

2. Die Hohlstruktur für Brennstoff nach Anspruch 1, wobei die Polyamidharzschicht (A) ein Polyolefin umfasst.

3. Die Hohlstruktur für Brennstoff nach Anspruch 2, wobei das in der Polyamidharzschicht (A) enthaltene Polyolefin und das in der Polyamidharzschicht (B) enthaltene Polyolefin jeweils ein säuremodifiziertes Polyolefin sind.

4. Die Hohlstruktur für Brennstoff nach einem der Ansprüche 1 bis 3, wobei ein Gehalt des in der Polyamidharzschicht (C) enthaltenen Polyolefins 0 bis 7 Massen-% beträgt.

5. Die Hohlstruktur für Brennstoff nach einem der Ansprüche 1 bis 4, wobei eine Dicke der Schicht (A)/eine Dicke der Schicht (C), wobei es sich um ein Verhältnis der Dicke der Polyamidharzschicht (A) zur Dicke der Polyamidharzschicht (C) handelt, das 3,0- bis 9,0-Fache beträgt, und eine Dicke der Schicht (B)/eine Dicke der Schicht (C), wobei es sich um ein Verhältnis der Dicke der Polyamidharzschicht (B) zur Dicke der Polyamidharzschicht (C) handelt, das 1,0- bis 3,0-Fache beträgt.

6. Die Hohlstruktur für Brennstoff nach Anspruch 5, wobei die Polyamidharzschicht (A) ein Polyolefin umfasst, jedes in der Polyamidharzschicht (A) und der Polyamidharzschicht (B) enthaltene Polyolefin ein säuremodifiziertes Polyolefin ist, und ein Gehalt des in der Polyamidharzschicht (C) enthaltenen Polyolefins 0 bis 7 Massen-% beträgt.

7. Die Hohlstruktur für Brennstoff nach einem der Ansprüche 1 bis 6, wobei in der Polyamidharzschicht (B) eine Gesamtmenge des Polyolefins, des Polyamidharzes (b1) und des Polyamidharzes (b2) mehr als 95 Massen-% der Polyamidharzschicht (B) ausmacht.

8. Die Hohlstruktur für Brennstoff nach einem der Ansprüche 1 bis 7, wobei das Fluorharz ein Fluorethylen(co)polymer umfasst.

9. Die Hohlstruktur für Brennstoff nach einem der Ansprüche 1 bis 7, wobei das Fluorharz ein Ethylen/Fluorethylenpropylen-Copolymer umfasst.

10. Die Hohlstruktur für Brennstoff nach einem der Ansprüche 1 bis 9, wobei die leitfähige Substanz eine leitfähige Kohlenstoffverbindung umfasst.

11. Die Hohlstruktur für Brennstoff nach einem der Ansprüche 1 bis 10, wobei die Polyamidharzschicht (A) einen Weichmacher in einem Anteil von 1 bis 20 Massen-% in der Polyamidharzschicht (A) umfasst.

12. Die Hohlstruktur für Brennstoff nach einem der Ansprüche 1 bis 11, wobei die Polyamidharzschicht (C) einen Weichmacher in einem Anteil von 1 bis 20 Massen-% in der Polyamidharzschicht (C) umfasst.

## Revendications

1. Structure creuse pour combustible, comprenant une couche de résine de polyamide (A), une couche de résine de polyamide (B), une couche de résine de polyamide (C) et une couche conductrice (D) dans cet ordre depuis l'extérieur,
dans laquelle la couche de résine de polyamide (A) comprend une résine de polyamide (a), 90 % en moles ou plus de tous les motifs structurels de la résine de polyamide (a) étant un ou plusieurs parmi : un motif structurel dérivé d'un lactame ayant 10 à 12 atomes de carbone ; un motif structurel dérivé d'un acide aminocarboxylique ayant 10 à 12 atomes de carbone ; un motif structurel dérivé d'un acide dicarboxylique aliphatique ayant 6 à 12 atomes de carbone ; et un motif structurel dérivé d'une diamine aliphatique ayant 6 à 12 atomes de carbone,
dans laquelle la couche de résine de polyamide (B) comprend une polyoléfine, une résine de polyamide (b1) et une résine de polyamide (b2) ; la teneur en polyoléfine est de 5 à 40 % en masse de la couche de résine de polyamide (B) ; le rapport en masse (b1/b2) de la teneur en résine de polyamide (b1) à la teneur en résine de polyamide (b2) est de 55/45 à 95/5, la résine de polyamide (b1) comprenant : un motif structurel dérivé d'une diamine contenant 70 % en moles ou plus d'un motif structurel dérivé de métaxylylènediamine ; et un motif structurel dérivé d'un acide dicarboxylique contenant 70 % en moles ou plus d'un motif structurel dérivé d'un acide dicarboxylique aliphatique ayant 4 à 8 atomes de carbone, la résine de polyamide (b2) comprenant : un motif structurel dérivé d'une diamine contenant 70 % en moles ou plus d'un motif structurel dérivé de xylylènediamine ; et un motif structurel dérivé d'un acide dicarboxylique contenant 70 % en moles ou plus d'un motif structurel dérivé d'un acide dicarboxylique aliphatique ayant 9 à 12 atomes de carbone,
dans laquelle la couche de résine de polyamide (C) comprend une résine de polyamide (c), 90 % en moles ou plus de tous les motifs structurels de la résine de polyamide (c) étant un ou plusieurs parmi : un motif structurel dérivé d'un lactame ayant 10 à 12 atomes de carbone ; un motif structurel dérivé d'un acide aminocarboxylique ayant 10 à 12 atomes de carbone ; un motif structurel dérivé d'un acide dicarboxylique aliphatique ayant 6 à 12 atomes de carbone ; et un motif structurel dérivé d'une diamine aliphatique ayant 6 à 12 atomes de carbone, et
dans laquelle la couche conductrice (D) comprend une résine fluorée et une substance conductrice.

2. Structure creuse pour combustible selon la revendication 1, dans laquelle la couche de résine de polyamide (A) comprend une polyoléfine.

3. Structure creuse pour combustible selon la revendication 2, dans laquelle la polyoléfine contenue dans la couche de résine de polyamide (A) et la polyoléfine contenue dans la couche de résine de polyamide (B) sont chacune une polyoléfine modifiée par un acide.

4. Structure creuse pour combustible selon l'une quelconque des revendications 1 à 3, dans laquelle la teneur en polyoléfine contenue dans la couche de résine de polyamide (C) est de 0 à 7 % en masse.

5. Structure creuse pour combustible selon l'une quelconque des revendications 1 à 4, dans laquelle l'épaisseur de la couche (A) / l'épaisseur de la couche (C), qui est le rapport de l'épaisseur de la couche de résine de polyamide (A) à l'épaisseur de la couche de résine de polyamide (C), est de 3,0 à 9,0 fois, et l'épaisseur de la couche (B) / l'épaisseur de la couche (C), qui est le rapport de l'épaisseur de la couche de résine de polyamide (B) à l'épaisseur de la couche de résine de polyamide (C), est de 1,0 à 3,0 fois.

6. Structure creuse pour combustible selon la revendication 5, dans laquelle la couche de résine de polyamide (A) comprend une polyoléfine, chaque polyoléfine contenue dans la couche de résine de polyamide (A) et la couche de résine de polyamide (B) est une polyoléfine modifiée par un acide, et la teneur en polyoléfine contenue dans la couche de résine de polyamide (C) est de 0 à 7 % en masse.

7. Structure creuse pour combustible selon l'une quelconque des revendications 1 à 6, dans laquelle, dans la couche de résine de polyamide (B), le total de la polyoléfine, de la résine de polyamide (b1) et de la résine de polyamide (b2) représente plus de 95 % en masse de la couche de résine de polyamide (B).

8. Structure creuse pour combustible selon l'une quelconque des revendications 1 à 7, dans laquelle la résine fluorée comprend un (co)polymère de fluoroéthylène.

9. Structure creuse pour combustible selon l'une quelconque des revendications 1 à 7, dans laquelle la résine fluorée comprend un copolymère d'éthylène/fluoroéthylène propylène.

10. Structure creuse pour combustible selon l'une quelconque des revendications 1 à 9, dans laquelle la substance conductrice comprend un composé de carbone conducteur.

11. Structure creuse pour combustible selon l'une quelconque des revendications 1 à 10, dans laquelle la couche de résine de polyamide (A) comprend un plastifiant en une proportion de 1 à 20 % en masse dans la couche de résine de polyamide (A).

12. Structure creuse pour combustible selon l'une quelconque des revendications 1 à 11, dans laquelle la couche de résine de polyamide (C) comprend un plastifiant en une proportion de 1 à 20 % en masse dans la couche de résine de polyamide (C).
